# EUROPÄISCHE PATENTSCHRIFT

(11) **EP 4 202 871 B1**
(45) Veröffentlichungstag und Bekanntmachung des Hinweises auf die Patenterteilung: **13.05.2026**
(21) Anmeldenummer: 21216900.7
(22) Anmeldetag: 22.12.2021
(51) Int. Cl.: G07C 1/10, G06F 3/16, H04L 67/306

(54) **ANWESENHEITSERFASSUNGS-TERMINAL MIT NUTZERSPEZIFISCHER INTERAKTION**
PRESENCE DETECTION TERMINAL WITH USER-SPECIFIC INTERACTION
TERMINAL DE DÉTECTION DE PRÉSENCE À INTERACTION SPÉCIFIQUE À L'UTILISATEUR

(43) Veröffentlichungstag der Anmeldung: 28.06.2023
(73) Patentinhaber: dormakaba Deutschland GmbH, 58256 Ennepetal (DE)
(72) Erfinder: Reinbold, Andreas, 78056 Villingen-Schwenningen (DE); Ruof, Martin, 78056 Villingen-Schwenningen (DE)
(74) Vertreter: Balder IP Law, S.L.

(56) Entgegenhaltungen:
- US-A1- 2013 048 716

## Beschreibung

Die vorliegende Erfindung betrifft ein Anwesenheitserfassungs-Terminal zur Erfassung einer Anwesenheitsinformation einer Person auf Basis einer Aktion der Person. Insbesondere betrifft die Erfindung ein Zeiterfassungs-Terminal. Weiterhin betrifft die vorliegende Erfindung ein computerimplementiertes Verfahren zum Betreiben eines entsprechenden Anwesenheitserfassungs-Terminals, insbesondere Zeiterfassungs-Terminals, zur Erfassung einer Anwesenheitsinformation einer Person auf Basis einer Aktion der Person, sowie ein entsprechendes Computerprogramm.

Anwesenheitserfassungs-Terminals sind insbesondere in der Arbeitswelt zur Erfassung der Anwesenheit eines/einer Mitarbeiters/-in weit verbreitet. Anwesenheitserfassungs-Terminals befinden sich häufig in Bürogebäuden, Fabrikhallen oder etwa auch Krankenhäusern. Mithilfe der Anwesenheitserfassungs-Terminals wird ein System bereitgestellt, was eine elektronische Erfassung und Speicherung von Mitarbeiteranwesenheiten erlaubt. Im Falle eines Zeiterfassungs-Terminals dient das Terminal auch zur Erfassung und Speicherung der absolvierten Arbeitszeiten. Allgemein wird in diesem Zusammenhang vorliegend von der Anwesenheitsinformation einer Person gesprochen, welche Person sich etwa über das Anwesenheitserfassungs-Terminal zur Arbeit einbuchen oder beispielsweise für eine Pause oder am Ende des Arbeitstags ausloggen bzw. aus dem System ausbuchen möchte.

Anwesenheitserfassungs-Terminals erlauben es zentral, etwa an einer Stelle im Eingangsbereich eines Bürogebäudes oder aber auch auf jeder Etage bzw. in jeder Abteilung eines Gebäudes/Unternehmens, einen Punkt zur Interaktion für die Personen bereitzustellen, über welchen einfach die Buchungsvorgänge realisiert werden können. Dem Arbeitgeber steht dann ein zentrales System zur Verfügung, etwa über die Speicherverwaltungseinheit des Anwesenheitserfassungs-Terminals, über welches/welche der Arbeitgeber ohne großen Aufwand die Anwesenheitsinformationen der Personen nachhalten kann.

Übliche Anwesenheitserfassungs-Terminals, von denen die vorliegende Erfindung ausgeht, stellen lediglich eine einheitliche Art der Interaktion mit den Benutzern zur Verfügung. Dabei wird regelmäßig nicht auf benutzerspezifische Bedürfnisse bzw. Präferenzen oder gar notwendige Voraussetzungen eines einzelnen Nutzers Rücksicht genommen.

US 2013/0048716 A1 offenbart Systeme und Verfahren, mit denen ein Karteninhaber die Benutzeroberfläche eines Terminals in einem Zugangskontroll- oder Zeiterfassungssystem anpassen kann. Die Verfahren umfassen den Empfang von Benutzerinformationen von einem Karteninhaber oder von einer Karte und die Aktualisierung mindestens einer Terminaleigenschaft auf der Grundlage der empfangenen Benutzerinformationen. Die offenbarten Systeme und Verfahren können automatisch das Anzeigenerscheinungsbild oder das Verhalten des Terminals ändern. Die Änderungen können auf der Grundlage der Identifikation des Benutzers, zum Beispiel des Karteninhabers, gemacht werden.

Vor diesem Hintergrund ist eine der vorliegenden Erfindung zugrundeliegende Aufgabe, ein verbessertes Anwesenheitserfassungs-Terminal bereitzustellen, bei dem die Interaktion mit dem Anwesenheitserfassungs-Terminal für die Gesamtheit der Nutzer benutzerfreundlicher und einfacher in der Bedienung ausgestaltet ist.

Weiterhin liegt der vorliegenden Erfindung die Aufgabe zugrunde, ein entsprechendes computerimplementiertes Verfahren zum Betreiben eines Anwesenheitserfassungs-Terminals bzw. ein entsprechendes Computerprogramm bereitzustellen, um die Benutzerfreundlichkeit und Einfachheit in der Interaktion für die Gesamtheit der Nutzer weiter zu steigern.

Erfindungsgemäß werden die genannten Aufgaben durch das vorschlagsgemäße Anwesenheitserfassungs-Terminal, insbesondere Zeiterfassungs-Terminal, zur Erfassung einer Anwesenheitsinformation einer Person auf Basis einer Aktion der Person, sowie durch das vorschlagsgemäße computerimplementierte Verfahren zum Betreiben eines Anwesenheitserfassungs-Terminals, sowie durch das vorschlagsgemäße Computerprogramm mit den Merkmalen der entsprechenden unabhängigen Ansprüche gelöst. Darüber hinaus sind bevorzugte Ausführungsformen den abhängigen Ansprüchen sowie der Beschreibung zu entnehmen.

Im Einzelnen ist ein Anwesenheitserfassungs-Terminal zur Erfassung einer Anwesenheitsinformation einer Person auf Basis einer Aktion der Person vorgeschlagen. Bei dem vorschlagsgemäßen Anwesenheitserfassungs-Terminal kann es sich insbesondere um ein Zeiterfassungs-Terminal handeln. Dabei umfasst das vorschlagsgemäße Anwesenheitserfassungs-Terminal:
- eine Steuereinheit,
- eine Speicherverwaltungseinheit, wobei die Speicherverwaltungseinheit einen Stammsatz personenspezifischer Daten umfasst, und
- eine identification engine, wobei die identification engine zur Identifizierung der Person und zur Ausgabe einer Identifizierungsinformation eingerichtet ist.

Die Steuereinheit ist derart mit der Speicherverwaltungseinheit interagierend eingerichtet, im Stammsatz in Abhängigkeit von der Identifizierungsinformation zu überprüfen, welche Art einer Interaktion die identifizierte Person mit dem Anwesenheitserfassungs-Terminal wünscht. Ferner ist die Steuereinheit derart eingerichtet ist, dass am Anwesenheitserfassungs-Terminal und/oder an einem mobilen Zutrittsmedium der Person eine nutzerspezifische Art der Interaktion für die identifizierte Person bereitgestellt wird.

In Bezug auf das computerimplementierte Verfahren ist im Einzelnen ein computerimplementiertes Verfahren zum Betreiben eines Anwesenheitserfassungs-Terminals, insbesondere Zeiterfassungs-Terminal, zur Erfassung einer Anwesenheitsinformation einer Person auf Basis einer Aktion der Person vorgeschlagen, welches Verfahren zumindest die folgenden Schritte umfasst:
- Identifizieren der Person durch eine identification engine,
- Überprüfen eines Stammsatzes personenspezifischer Daten dahingehend, welche Art einer Interaktion die identifizierte Person mit dem Anwesenheitserfassungs-Terminal wünscht, und
- Bereitstellen einer nutzerspezifischen Art der Interaktion für die identifizierte Person.

Die im Rahmen des vorschlagsgemäßen Anwesenheitserfassungs-Terminals beschriebenen Merkmale und Vorteile sind entsprechend auf das vorschlagsgemäße computerimplementierte Verfahren zum Betreiben eines Anwesenheitserfassungs-Terminals übertragbar. Dabei kann das computerimplementierte Verfahren zum Betreiben jenes vorschlagsgemäßen und beschriebenen Anwesenheitserfassungs-Terminals eingerichtet sein. Das vorschlagsgemäße und beschriebene Anwesenheitserfassungs-Terminal wiederum ist bevorzugt zur Ausführung des vorschlagsgemäßen computerimplementierten Verfahrens zum Betreiben eines Anwesenheitserfassungs-Terminals eingerichtet. Insofern werden die das Anwesenheitserfassungs-Terminal bzw. das Verfahren zum Betreiben des Anwesenheitserfassungs-Terminals betreffenden Merkmale und spezifische Vorteile regelmäßig gemeinsam nur einfach beschrieben. Im Zusammenhang mit der Vorrichtung des Anwesenheitserfassungs-Terminals beschriebene Merkmale sind entsprechend in das computerimplementierte Verfahren betreffende Ansprüche aufnehmbar.

Ein wesentlicher Vorteil der vorliegenden Erfindung ist, dass das Anwesenheits-Erfassungsterminal (kurz: Terminal) vorteilhaft eine nutzerspezifische Interaktionsmöglichkeit bereitstellt. So wird zunächst erkannt, welche Person konkret mit dem Terminal interagieren möchte, bzw. welcher Gruppe an Personen die konkret interagierende Person zuzuordnen ist, ehe sodann nutzerspezifisch die Art der Interaktion bereitgestellt wird. Auf diese Weise kann auf eine Vielzahl an Bedürfnissen bzw. Präferenzen der Belegschaft von Mitarbeitern/-innen spezifisch eingegangen werden. Sowohl sprachbezogen als auch hinsichtlich individueller spezifischer Bedürfnisse kann die Interaktion sodann angepasst werden. Besonders vorteilhaft ist dadurch auch ein barrierefreies Interaktionsverhalten für das vorschlagsgemäße Anwesenheitserfassungs-Terminal gegeben, da etwa auf interagierende Personen mit einer spezifischen Behinderung angepasst eine vereinfachte Möglichkeit der Interaktion voreingestellt zur Verfügung gestellt werden kann. Im Vergleich zu einem einheitlichen Vorgehen bei Terminals aus dem Stand der Technik kann somit die Interaktion mit den Terminals für die gesamte heterogene Gruppe der Belegschaft bedienerfreundlich ausgestaltet sein. Dabei ist besonders vorteilhaft, dass der Abgleich und daraus resultierend die Bereitstellung der passenden Art der Interaktion automatisch abläuft, indem mit der Speicherverwaltungseinheit kommuniziert wird, in der in einem Stammsatz die Bedürfnisse hinterlegt sind. Eine aufwendige Eingabe durch die interagierende Person, welche Art der Interaktion sie denn gerne durchführen würde, ist somit nicht notwendig.

Die Steuereinheit kann als integraler Bestandteil des Anwesenheitserfassungs-Terminals ausgebildet sein oder auch separat. So kann die Steuereinheit beispielsweise auch an einem anderen Ort als innerhalb eines Gehäuses des Anwesenheitserfassungs-Terminals oder etwa online abgebildet sein und über eine Kommunikationsverbindung mit dem Anwesenheitserfassungs-Terminal kommunizieren und Vorgänge wie etwa Buchungsvorgänge steuern.

Die Speicherverwaltungseinheit kann lokal vorgesehen sein und beispielsweise integrierter Bestandteil des Anwesenheitserfassungs-Terminals sein. Alternativ kann die Speicherverwaltungseinheit ebenso online in einer Cloud vorgesehen sein. Sodann kann das Anwesenheitserfassungs-Terminal etwa über die Steuereinheit eine Onlineverbindung zu der Speicherverwaltungseinheit herstellen und auf diese Weise mit der Speicherverwaltungseinheit kommunizieren.

In der Speicherverwaltungseinheit können Stammsätze von Mitarbeiterdaten gespeichert sein. Dort hinterlegte personenspezifische Daten können beispielsweise Informationen über die Arbeitszeiten der Person, die Sprache, die die Person spricht, um eine spezifische Interaktion mit dem Anwesenheitserfassungs-Terminal zu ermöglichen, oder zwecks nutzerspezifischer Interaktion auch individuelle Vorlieben oder Voraussetzungen gespeichert sein. Beispielsweise kann dort hinterlegt sein, wenn eine Sehbehinderung oder Hörbehinderung einer Person vorliegt, um eine individuell an die Bedürfnisse angepasste Interaktion zu ermöglichen.

Die Speicherverwaltungseinheit kann zum Verarbeiten und Speichern der Anwesenheitsinformation der Person eingerichtet sein.

Das vorschlagsgemäße Terminal ist regelmäßig fest an einer Wand oder im Bereich etwa eines Flures in einem Bürogebäude, einem Krankenhaus oder einer Fabrikhalle positioniert. Dazu kann das Terminal beispielsweise eine Anbindungsstruktur umfassen, welche Anbindungsstruktur dem Verbinden mit einer Wand oder dem Verbinden mit einem Ständer dient.

Ferner ist in dem Terminal regelmäßig eine elektrische Verbindungsstruktur zur Verbindung mit einer bestehenden elektrischen Versorgung in der Umgebung vorgesehen. Das Terminal könnte zwar auch batteriebetrieben eingerichtet sein, es ist jedoch bei dem Einsatzgebiet im Rahmen von Bürogebäuden, Fabrikhallen oder Krankenhäusern bevorzugt, das Terminal permanent an eine Stromquelle in der entsprechenden Umgebung angebunden zu haben.

Vorschlagsgemäß weist das Anwesenheitserfassungs-Terminal eine identification engine auf. Die identification engine kann auch Identifikationseinrichtung genannt werden. Sie stellt eine Einrichtung dar, um die Identität einer Person, die mit dem Anwesenheitserfassungs-Terminal in Interaktion tritt, festzustellen. Die identification engine kann durch eine Software im Anwesenheitserfassungs-Terminal bzw. im Rahmen der Steuereinheit realisiert sein oder zumindest eine Software umfassen. Über die identification engine wird eine Identifizierungsinformation ausgegeben. Dabei kann die Identifizierungsinformation die interagierende Person eindeutig repräsentieren oder sie einer Personen-Gruppe zuordnen.

Hierzu kann die identification engine in einer Weise die Daten nutzen, welche Daten aus der Interaktion einer in der Nähe befindlichen Person mit dem Terminal resultieren.

So kann beispielsweise eine Sensoreinheit zur Beobachtung einer Umgebungszone vorgesehen sein, welche Sensoreinheit eine detektierte Präsenzinformation der Person ausgeben kann. Die genannte identification engine kann zum Beispiel jene bereitgestellte detektierte Präsenzinformation zur Identifizierung nutzen. So kann etwa ein von der Sensoreinheit aufgenommenes Foto durch die identification engine analysiert und einer Person zugeordnet werden. Auch im Beispiel einer Erfassung durch die Sensoreinheit etwa mittels drahtloser Kommunikation mit einem mobilen Zutrittsmedium, wie etwa einer Zutrittskarte, einem Badge oder einem mobilen Endgerät der interagierenden Person, kann jene detektierte Präsenzinformation beispielsweise in Form der Kennung der Schlüsselkarte in der identification engine weiterverarbeitet und zur Identifizierung genutzt werden.

Die Identifizierung der Person kann dann vorteilhaft auf Basis der detektierten Präsenzinformation der Person erfolgen.

Alternativ oder zusätzlich kann die Identifizierung auch auf Grundlage zumindest einer weiteren personenbezogenen Information erfolgen. So ist denkbar, dass auch die identification engine über eigene Sensoren verfügt, oder aber etwa dass die Sensoreinheit zunächst eine detektierte Präsenzinformation bereitstellt, die lediglich grundsätzlich die Anwesenheit einer Person repräsentiert, und sodann von der Sensoreinheit eine weitere personenbezogene Information eingeholt wird, die der Identifizierung der Person dient.

Die weitere personenbezogene Information muss keine persönlichen Daten umfassen, sondern nur eine Eindeutigkeit der Person bzw. eindeutige Unterscheidbarkeit einer Person von anderen Personen ermöglichen.

Die Steuereinheit und die Speicherverwaltungseinheit sind interagierend miteinander eingerichtet. Die Steuereinheit kann mithilfe der erfassten Identifizierungsinformation, die repräsentativ für die mit dem Terminal interagierende Person steht, im Stammsatz der personenspezifischen Daten prüfen, welche konkrete Art einer Interaktion die Person präferiert. So kann die Person etwa eine sprachbasierte Interaktion bevorzugen, etwa über Audioausgaben am Terminal oder auch an einem mobilen Zutrittsmedium der Person oder beispielsweise auch visuelle Interaktion über Anzeigen auf einem Display, sei es am Terminal oder auch am mobilen Zutrittsmedium. Die Steuereinheit stellt im Anschluss an das Überprüfen im Stammsatz dann die bestimmungsgemäße von der Person gewünschte Art der Interaktion bereit.

Nach einer Ausführungsform des Anwesenheitserfassungs-Terminals ist wenigstens eine Sensoreinheit vorgesehen, wobei die Sensoreinheit zur Beobachtung einer Umgebungszone und, insbesondere zur Ausgabe einer aus der Beobachtung der Umgebungszone detektierten Präsenzinformation der Person, eingerichtet ist.

Nach einer Ausführungsform des computerimplementierten Verfahrens zum Betreiben eines Anwesenheitserfassungs-Terminals ist vorgeschlagen, dass zum Identifizieren der Person zunächst ein Beobachten einer Umgebungszone mit wenigstens einer Sensoreinheit erfolgt.

Die wenigstens eine Sensoreinheit beobachtet die Umgebungszone in der Nähe des Anwesenheitserfassungs-Terminals, wie etwa einen Flur eines Bürogebäudes beim Anwesenheitserfassungs-Terminal oder einen Eingangsbereich eines Gebäudes oder einer Etage. Hier werden die Personen erwartet, die in Interaktion mit dem Anwesenheitserfassungs-Terminal treten. Die Sensoreinheit kann einen oder mehrere Sensoren umfassen. Es können auch verschiedene Sensoreinheiten bzw. Sensoren vorgesehen sein. Die Sensoreinheit bzw. Sensoren können als integraler Bestandteil des Anwesenheitserfassungs-Terminals etwa in seinem Gehäuse eingebunden sein oder ganz oder teilweise außerhalb des regelmäßig an bzw. in der Nähe einer Wand montierten Anwesenheitserfassungs-Terminals angeordnet sein. Dann kann vorteilhaft eine Kommunikationsverbindung zwischen der Sensoreinheit und dem Anwesenheitserfassungs-Terminal, insbesondere seiner Steuereinheit, vorgesehen sein.

Die Sensoreinheit stellt auf Grundlage der Beobachtung eine detektierte Präsenzinformation der in der Umgebungszone erfassten Person bereit. Dabei kann es sich lediglich um die Information handeln, dass eine Person anwesend ist. Oder aber es kann auch ein höherer Detailgrad der detektierten Präsenzinformation vorliegen, indem etwa ein Foto der Person als detektierten Präsenzinformation ausgegeben wird.

Mittels der Beobachtung über die Sensoreinheit kann die interagierende Person bestmöglich identifiziert und somit eine individuelle, den Präferenzen angepasste Art der Interaktion bereitgestellt werden. Die Interaktion mit dem Terminal läuft für die heterogene Gruppe an interagierenden Personen somit bedienerfreundlicher ab.

Nach einer Ausführungsform des Anwesenheitserfassungs-Terminals ist ferner ein Display am Anwesenheitserfassungs-Terminal vorgesehen und/oder das Anwesenheitserfassungs-Terminal mit einem ein Display umfassenden mobilen Zutrittsmedium der Person in Kommunikationsverbindung stehend eingerichtet. Dabei umfasst die Art der Interaktion zumindest den folgenden Aspekt:
- Bereitstellen einer nutzerspezifischen Benutzeroberfläche an dem Display des Anwesenheitserfassungs-Terminals und/oder des mobilen Zutrittsmediums der Person.

Nach einer Ausführungsform des computerimplementierten Verfahrens zum Betreiben eines Anwesenheitserfassungs-Terminals ist vorgeschlagen, dass die Art der Interaktion zumindest den folgenden Aspekt umfasst:
- Bereitstellen einer nutzerspezifischen Benutzeroberfläche an dem Display des Anwesenheitserfassungs-Terminals und/oder des mobilen Zutrittsmediums der Person.

Auf diese Weise kann jeder mit dem Terminal interagierenden Person ein individuell den Präferenzen angepasstes User Interface zur Interaktion, etwa zur Einbuchung, Ausbuchung, Registrieren einer Pause, Abfragen eines Guthabens, etc., bereitgestellt werden. Für die Gesamtheit der Nutzer wird somit eine benutzerfreundliche individualisierte Interaktion mit dem Terminal ermöglicht.

Nach einer Ausführungsform des Anwesenheitserfassungs-Terminals ist vorgeschlagen, dass die nutzerspezifische Benutzeroberfläche in einer nutzerspezifischen Schriftgröße und/oder in einer nutzerspezifischen Sprache bereitgestellt ist.

Nach einer Ausführungsform des computerimplementierten Verfahrens zum Betreiben eines Anwesenheitserfassungs-Terminals ist vorgeschlagen, dass die nutzerspezifische Benutzeroberfläche in einer nutzerspezifischen Schriftgröße und/oder in einer nutzerspezifischen Sprache bereitgestellt wird.

Auf diese Weise kann besser auf die individuellen Präferenzen der Mitarbeiter/- innen eingegangen werden. So können beispielsweise individuelle Sehschwächen berücksichtigt werden. Ferner können verschiedene Muttersprachen der interagierenden Personen Berücksichtigung finden. Für die heterogene Gruppe der Mitarbeiterschaft wird ein benutzerfreundliches Terminal bereitgestellt.

Nach einer Ausführungsform des Anwesenheitserfassungs-Terminals ist ein bzw. das Display am Anwesenheitserfassungs-Terminal vorgesehen und/oder das Anwesenheitserfassungs-Terminal mit einem bzw. dem ein bzw. das Display umfassenden mobilen Zutrittsmedium der Person in Kommunikationsverbindung stehend eingerichtet. Dabei umfasst die Art der Interaktion zumindest den folgenden Aspekt:
- Ausgabe eines Sprachsignals am Anwesenheitserfassungs-Terminal und/oder an dem mobilen Zutrittsmedium der Person.

Insbesondere ist dabei das Sprachsignal in einer nutzerspezifischen Sprache und/oder in einer nutzerspezifischen Lautstärke bereitgestellt.

Nach einer Ausführungsform des computerimplementierten Verfahrens zum Betreiben eines Anwesenheitserfassungs-Terminals ist vorgeschlagen, dass die Art der Interaktion zumindest den folgenden Aspekt umfasst:
- Ausgabe eines Sprachsignals am Anwesenheitserfassungs-Terminal und/oder an dem mobilen Zutrittsmedium der Person.

Insbesondere wird dabei das Sprachsignal in einer nutzerspezifischen Sprache und/oder in einer nutzerspezifischen Lautstärke bereitgestellt.

Auf diese Weise kann jeder mit dem Terminal interagierenden Person eine individuelle den Präferenzen bzw. Bedürfnissen angepasste Interaktion, etwa zur Einbuchung, Ausbuchung, Registrieren einer Pause, Abfragen eines Guthabens, etc., ermöglicht werden. So kann insbesondere auch auf Mitarbeiter mit einer Leseschwäche oder Analphabetismus Rücksicht genommen werden. Außerdem können die verschiedenen Nationalitäten und Sprachen der Mitarbeiter/-innen berücksichtigt werden. Für die Gesamtheit der Nutzer wird somit eine benutzerfreundliche individualisierte Interaktion mit dem Terminal ermöglicht.

Nach einer Ausführungsform des Anwesenheitserfassungs-Terminals ist vorgeschlagen, dass ferner eine intent engine (Absichtserkennungseinrichtung) zur Erfassung einer Absicht der Interaktion der Person mit dem Anwesenheitserfassungs-Terminal eingerichtet ist, wobei die intent engine derart konfiguriert ist, dass, zur Erfassung der Absicht der Interaktion der Person mit dem Anwesenheitserfassungs-Terminal, eine Signaleingabe durch die Person verwendet wird. Die intent engine kann dabei insbesondere ferner derart konfiguriert sein, dass die Signaleingabe wie folgt erfolgt:
- die intent engine empfängt ein von der Person an einem/dem mobilen Endgerät eingegebenes, die Absicht der Interaktion repräsentierendes Signal, und/oder
- die intent engine empfängt eine die Absicht der Interaktion repräsentierende Spracheingabe von der Person oder erkennt eine die Absicht der Interaktion repräsentierende Gesteneingabe von der Person, und/oder
- die intent engine verarbeitet ein von der Person an dem Anwesenheitserfassungs-Terminal, bevorzugt an einem Touchscreen-Display, eingegebenes und die Absicht der Interaktion repräsentierendes Signal, und/oder
- die intent engine empfängt ein von der Person mittels einer Aktion mit einer/der Zutrittskarte, einem/dem Badge, und/oder einem/dem mobilen Endgerät getriggertes, die Absicht der Interaktion repräsentierendes Signal.

Dabei kann die Aktion der Person mit ihrem mobilen Zutrittsmedium, wie dem Badge, eine eigentlich übliche Bewegung zur Initiierung eines Buchungsvorgangs sein (beispielsweise ein Vorhalten des Badges), wobei eine vorbestimmte Bewegungsabfolge, wie beispielsweise ein doppeltes, schnell hintereinander wiederholt durchgeführtes Vorhalten des Badges eine bestimmte Absicht repräsentiert.

Die gewünschte nutzerspezifische Art der Interaktion mit dem Anwesenheitserfassungs-Terminal wird durch die Person auf die folgende Art ausgewählt und/oder bestätigt: Durchführen einer vordefinierten Bewegung mit einem/dem mobilen Zutrittsmedium der Person, insbesondere erneutes Auflegen des mobilen Zutrittsmedium der Person, bevorzugt in Form eines Badges, auf eine Schnittstelle des Anwesenheitserfassungs-Terminals.

Nach einer Ausführungsform des computerimplementierten Verfahrens zum Betreiben eines Anwesenheitserfassungs-Terminals ist vorgeschlagen, dass die gewünschte nutzerspezifische Art der Interaktion mit dem Anwesenheitserfassungs-Terminal durch die Person ferner auf zumindest eine der folgenden Arten ausgewählt und/oder bestätigt wird:
- Durchführen einer Eingabe am Anwesenheitserfassungs-Terminal und/oder an einem/dem mobilen Zutrittsmedium der Person; und/oder
- Durchführen einer vordefinierten Gesteneingabe; und/oder
- Durchführen einer vordefinierten Spracheingabe.

Das mobile Zutrittsmedium der Person kann als Zutrittskarte, Badge und/oder mobiles Endgerät ausgebildet sein. Auf diese Weise kann eine besonders einfache kontaktlose Kommunikation zwischen der Person und dem Anwesenheitserfassungs-Terminal ablaufen.

Die intent engine kann auch Absichtserkennungseinrichtung genannt werden. Sie stellt eine Einrichtung dar, um die Absicht der Interaktion einer Person mit dem Anwesenheitserfassungs-Terminal festzustellen. Es kann durch die intent engine eine entsprechende Absichtsinformation ausgegeben werden. Die intent engine kann durch eine Software im Anwesenheitserfassungs-Terminal realisiert sein bzw. eine Software umfassen.

Dabei können verschiedene Daten von der intent engine zugrunde gelegt werden, um die Absicht der Person zu erfassen. So können zum einen in einem Stammsatz der Person hinterlegte Daten als eine Variable zur Auswertung zur

Verfügung stehen, etwa wenn die Schicht bzw. die Arbeitszeit der interagierenden Person beginnt bzw. es sich allgemein um eine Uhrzeit zu Beginn des Arbeitstages handelt und die Person am Anwesenheitserfassungs-Terminal erscheint, um sich vermutlich zur Arbeit einzubuchen. Es können auch die durch die Sensoreinheit oder andere Sensoren erfassten Bewegungsdaten zugrunde gelegt werden. Beispielsweise kann zur Erfassung dienen, ob sich eine Person in Richtung Gebäudeinneres oder in Richtung Ausgang bewegt, bzw. wie die Bewegungsgeschwindigkeit der Person ist. Insbesondere die Bewegungsrichtung und/oder die Bewegungsgeschwindigkeit können also als Auswertungsdaten der Absichtserkennung zugrunde gelegt werden.

Es ist auch möglich, dass mehr Aktionen am Anwesenheitserfassungs-Terminal vorgenommen werden können als lediglich Einbuchungs- oder Ausbuchungsvorgänge. So kann es möglich sein, dass eine Person etwa ein auf seiner Schlüsselkarte oder seinem Badge hinterlegtes Guthaben, etwa zur Nutzung in einer Kantine, abfragen möchte. Die intent engine kann dann beispielsweise auch die Uhrzeit in die Analyse einfließen lassen, welche Absicht hinter der Interaktion der Person mit dem Anwesenheitserfassungs-Terminal liegt, da etwa insbesondere zu Mittagszeiten regelmäßig das Guthaben abgefragt wird.

Auch vorbestimmte Arten von Bewegungen, etwa der Schlüsselkarte bzw. des Badges, durch die Person, die mit dem Anwesenheitserfassungs-Terminal interagiert, können repräsentativ für eine bestimmte Absicht stehen, welche die intent engine sodann erkennt und eine entsprechende Absichtsinformation ausgibt. Dabei können auch Absichten einer Interaktion mit dem Anwesenheitserfassungs-Terminal existieren, welche Absichten keine eindeutige Identifizierung der Person erfordern. So kann es bei solchen Absichten ausreichend sein, die detektierte Person einer Personen-Gruppe zuzuordnen, die etwa grundsätzlich mit dem Anwesenheitserfassungs-Terminal interagieren kann bzw. darf.

Dabei kann die intent engine derart konfiguriert sein, dass, zur Erfassung der Absicht der Interaktion der Person mit dem Anwesenheitserfassungs-Terminal, wenigstens eine der folgenden Informationen verwendet wird:
- eine Bewegungsrichtung der Person, und/oder
- eine Signaleingabe durch die Person.

Im Falle der Erfassung der Absicht auf Grundlage der Bewegungsrichtung kann die intent engine ferner derart konfiguriert sein, dass die Bewegungsrichtung über ein Kamera-Tracking und/oder per Ultra-Wideband Signal erfasst wird. Es können auch andere optische Sensoren und/oder eine Erfassung auf Basis einer Time of Flight (ToF) vorgesehen sein. Vorteilhaft kann die Interaktion zwischen Person und Anwesenheitserfassungs-Terminal auf diese Weise kontaktlos aus der Distanz stattfinden, sowie erfordert weiterhin auch keine individuelle Eingabe durch die Person, etwa am Anwesenheitserfassungs-Terminal selbst. So können grundsätzlich Bewegungsrichtungen oder auch bestimmte Bewegungen der Person selbst oder beispielsweise ihres mobilen Zutrittsmediums repräsentativ für bestimmte Absichten einer Interaktion stehen.

Grundsätzlich erlaubt das Vorsehen einer intent engine eine noch bedienerfreundlichere Interaktion der Personen mit dem Terminal, da die Absichten der Interaktion der Personen automatisch erfasst werden können und gegebenenfalls bei Bedarf automatisch Buchungsvorgänge vorgenommen werden können.

Nach einer Ausführungsform des Anwesenheitserfassungs-Terminals ist vorgeschlagen, dass ferner eine Feedback engine (Rückmeldungseinrichtung) vorgesehen ist, wobei die Feedback engine derart eingerichtet ist, dass, wenn die Interaktion der Person mit dem Anwesenheitserfassungs-Terminal erfolgt oder angefragt ist, ein Feedbacksignal am Anwesenheitserfassungs-Terminal und/oder an einem bzw. dem mobilen Zutrittsmedium der Person ausgegeben werden kann. Dabei kann das Feedbacksignal insbesondere auf eine der folgenden Arten ausgebildet sein:
- als akustisches Feedbacksignal; und/oder
- als Sprachsignal; und/oder
- als haptisches Feedbacksignal, insbesondere Vibrationssignal, vorzugsweise an dem mobilen Zutrittsmedium der Person; und/oder
- als grafisches Signal.

Nach einer Ausführungsform des computerimplementierten Verfahrens zum Betreiben eines Anwesenheitserfassungs-Terminals ist vorgeschlagen, dass das Anwesenheitserfassungs-Terminal und/oder ein mobiles bzw. das mobile Zutrittsmedium der Person ein Feedbacksignal über eine durchgeführte oder angefragte Interaktion mit dem Anwesenheitserfassungs-Terminal ausgibt. Dabei kann das Feedbacksignal zumindest auf eine der folgenden Arten ausgegeben werden:
- als akustisches Feedbacksignal; und/oder
- als Sprachsignal; und/oder
- als haptisches Feedbacksignal, insbesondere Vibrationssignal, vorzugsweise an dem mobilen Zutrittsmedium der Person; und/oder
- als grafisches Signal.

Das Feedbacksignal kann insbesondere auch eine Aufforderung oder eine Benutzerinformationen umfassen, mit der ein Unterhalter des Anwesenheitserfassungs-Terminals (z.B. Arbeitgeber) die Person, die als Benutzer mit dem Anwesenheitserfassungs-Terminal interagiert, zu etwas auffordert (z.B. Aufforderung "bei Personalabteilung melden", "bitte Überstunden reduzieren" etc.) oder diese über etwas informiert (z.B. Zeitkontostand).

Es kann vorgesehen sein, dass sensible personenspezifische Informationen nur auf einem mobilen Endgerät der Person ausgeben werden, während allgemeine und nicht sensible Informationen nur auf dem Terminal oder auf dem Terminal sowie dem mobilen Endgerät ausgeben werden.

Die Feedback engine kann auch als Rückmeldungseinrichtung bezeichnet werden. Die Feedback engine kann zumindest teilweise als Software in dem Anwesenheitserfassungs-Terminal bzw. in der Steuereinheit realisiert sein, über welche Software zum einen mithilfe der Speicherverwaltungseinheit überprüft werden kann, ob die Person überhaupt ein Feedback wünscht und, zum anderen, das entsprechende Feedback veranlasst werden kann. Dementsprechend kann die Feedback engine bzw. die Steuereinheit in Kommunikationsverbindung mit einer Sprachausgabeeinheit stehen, falls etwa ein Sprachsignal als Feedbacksignal gewünscht ist.

Nach einer weiteren Ausführungsform kann die Speicherverwaltungseinheit derart eingerichtet sein, dass, wenn eine Interaktion erfolgt ist, die Speicherverwaltungseinheit in den Daten der Person überprüft, ob ein Feedback zu der Interaktion der Person mit dem Anwesenheitserfassungs-Terminal gewünscht ist. Auf diese Weise kann die Interaktion zwischen Personen und Anwesenheitserfassungs-Terminal vorteilhaft individualisiert und besonders bedienerfreundlich, da spezifisch für die jeweilige Person, ablaufen. Besonders vorteilhaft kann etwa im Stammsatz der personenspezifischen Daten vor Ausgabe eines Feedbacksignals kontrolliert werden, ob die konkrete Person, die die Interaktion durchführt und zuvor identifiziert wurde, überhaupt ein Feedback wünscht, bzw. falls ja, in welcher Form das Feedback gewünscht ist. Die Feedback engine kann demnach derart eingerichtet sein, dass ein personenabhängiges Feedbacksignal ausgegeben werden kann. So kann beispielsweise ein Sprachsignal als Feedback in derjenigen Sprache erfolgen, die die interagierende Person spricht bzw. versteht. Ferner kann auch für die Person spezifisch hinterlegt sein, ob überhaupt ein sprachliches Feedback oder etwa ein grafisches oder haptisches Feedback erwünscht ist. Außerdem kann auf die individuellen Bedürfnisse der Personen eingegangen werden. So kann im Fall eine Hörbehinderung einer Person auf ein Sprachsignal als Feedbacksignal verzichtet werden, sondern nur ein grafischen und/oder haptisches Signal ausgegeben werden. Im Falle einer Person mit Sehbehinderung etwa kann beispielsweise bevorzugt auf ein akustisches bzw. sprachliches Signal oder haptisches Signal zurückgegriffen werden.

Die Benutzerfreundlichkeit des Terminals kann somit weiter verbessert werden, da Fehlbuchungen noch besser vermieden werden können. So kann insbesondere an die individuellen Präferenzen einer interagierenden Person angepasst ein Feedbacksignal über die erfolgte oder aber auch angefragte Buchung bzw. Interaktion erfolgen, woraufhin die interagierende Person noch Korrekturen vornehmen kann. So ist unter einer angefragten Interaktion bzw. dem Merkmal, wenn die Interaktion der Person mit dem Terminal angefragt ist, in Abgrenzung zu einer erfolgten Interaktion zu verstehen, dass die gewünschte Interaktion erkannt bzw. erfasst jedoch noch nicht durchgeführt worden ist. Es kann zunächst das Feedback an die Person erfolgen und beispielsweise abgewartet werden, ob die angefragte Interaktion nicht nochmals korrigiert wird.

Dazu kann vorzugsweise weiterhin eine interaction confirmation engine (Interaktionsbestätigungseinrichtung) vorgesehen sein, wobei die interaction confirmation engine zum Empfangen einer klarstellenden Absichtsinformation eingerichtet ist, wobei die klarstellende Absichtsinformation die Absicht der Interaktion der Person mit dem Anwesenheitserfassungs-Terminal verifiziert oder falsifiziert. Sodann kann abhängig von dem einer Person zurückgemeldeten Feedback diese Person dem Anwesenheitserfassungs-Terminal zur Verifizierung der Absicht eine positive klarstellende Absichtsinformation übermitteln oder eben eine negative, um die geplante Aktion bzw. Buchung zu verhindern. Die interaction confirmation engine kann zumindest teilweise als Software in dem Anwesenheitserfassungs-Terminal bzw. in der Steuereinheit realisiert sein, über welche Software entsprechende Signale bzw. Handlungen der Person zur Bestätigung bzw. Verneinung der zuvor kommunizierten Absicht der Interaktion ausgewertet werden können.

Nach einer weiteren Ausführungsform kann die interaction confirmation engine als voice detection engine (Spracherkennungseinrichtung) zur Erfassung einer Spracheingabe durch die Person und/oder als gesture detection engine (Gestenerkennungseinrichtung) zur Erfassung einer Gesteneingabe durch die Person ausgebildet sein. Auf diese Weise kann durch die Person über eine einfache Spracheingabe oder über eine vorbestimmte Geste die zuvor durch das Anwesenheitserfassungs-Terminal der Person zurückgemeldete Absicht der Interaktion bestätigt werden. Die Sicherheit der Buchungsvorgänge dahingehend, dass keine Fehlbuchungen stattfinden, kann weiter erhöht werden. Die voice detection engine gesture und/oder die detection engine kann als Software ausgeführt sein oder eine Software umfassen.

Weiterhin wird die Aufgabe durch ein Computerprogramm gelöst, welches Computerprogramm Befehle umfasst, die bei der Ausführung des Programms durch einen Prozessor eines Anwesenheitserfassungs-Terminals das Anwesenheitserfassungs-Terminal veranlassen, die Schritte des zuvor bzw. nachfolgend beschriebenen vorschlagsgemäßen Verfahrens auszuführen.

Weiterhin wird ein computerlesbares Medium vorgeschlagen, auf dem das zuvor genannte Computerprogramm gespeichert ist.

Weitere vorteilhafte und bevorzugte Ausgestaltungen ergeben sich aus der nachfolgenden Beschreibung mit Bezug auf die Figuren. In den lediglich Ausführungsbeispiele wiedergebenden Zeichnungen zeigt
- Figur 1: eine schematische Konfiguration eines Ausführungsbeispiels des vorschlagsgemäßen Anwesenheitserfassungs-Terminals;
- Figur 2: ein Flussdiagramm der Verfahrensschritte eines vorschlagsgemäßen computerimplementierten Verfahrens zum Betreiben eines Anwesenheitserfassungs-Terminals;
- Figur 3: eine schematische Konfiguration eines Ausführungsbeispiels einer identification engine des vorschlagsgemäßen Anwesenheitserfassungs-Terminals;
- Figur 4: eine schematische Draufsicht auf eine Anordnung eines vorschlagsgemäßen Anwesenheitserfassungs-Terminals in einem Flur; und
- Figur 5: eine schematische Konfiguration eines Ausführungsbeispiels einer Steuereinheit des vorschlagsgemäßen Anwesenheitserfassungs-Terminals.

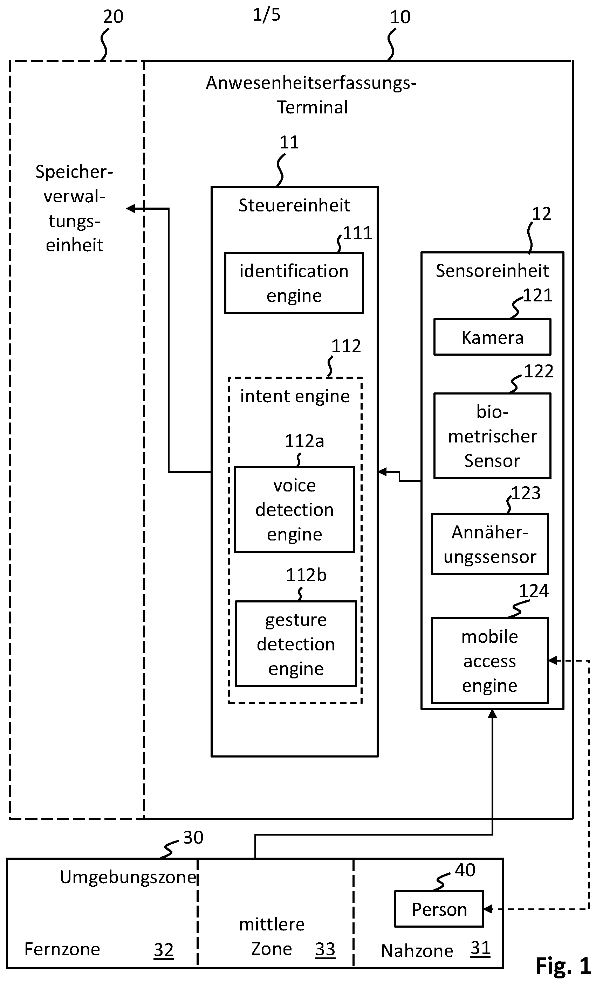

In Figur 1 ist schematisch die Konfiguration eines Ausführungsbeispiels eines vorschlagsgemäßen Anwesenheitserfassungs-Terminals 10 dargestellt. Bei dem Anwesenheitserfassungs-Terminal 10 handelt es sich um ein Zeiterfassungs-Terminal, welches dem Zweck dient, eine Zeiterfassung von Mitarbeitern/-innen beispielsweise am Eingang eines Unternehmensgebäudes zu ermöglichen. Konkret können an dem Zeiterfassungs-Terminal unterschiedliche Buchungsvorgänge durchgeführt und somit unterschiedliche Anwesenheitsinformationen gespeichert bzw. verarbeitet werden. So kann ein Mitarbeiter/eine Mitarbeiterin etwa seine/ihre Anwesenheit einbuchen oder ausbuchen, wenn dieser/diese etwa eine Pause macht oder sein/ihr Arbeitstag beendet ist.

Das Anwesenheitserfassungs-Terminal 10 ist demnach zur Erfassung einer Anwesenheitsinformation einer Person 40 auf Basis einer Aktion der Person 40 eingerichtet. Das Anwesenheitserfassungs-Terminal 10 umfasst, wie in Figur 1 dargestellt, zumindest eine Steuereinheit 11 sowie ferner eine Speicherverwaltungseinheit 20. Die Speicherverwaltungseinheit 20 kann dabei lokal vorgesehen und beispielsweise integrierter Bestandteil des Anwesenheitserfassungs-Terminals 10 sein oder die Speicherverwaltungseinheit 20 kann ebenso online in einer Cloud vorgesehen sein. Dies ist in Figur 1 über die gestrichelten Linien angedeutet. Sodann kann das Anwesenheitserfassungs-Terminal 10 etwa über die Steuereinheit 11 eine Onlineverbindung zu der Speicherverwaltungseinheit 20 herstellen und auf diese Weise mit der Speicherverwaltungseinheit 20 kommunizieren.

In der Speicherverwaltungseinheit 20 sind Stammsätze der Personen 40, welche Personen 40 mit dem Anwesenheitserfassungs-Terminal 10 interagieren, hinterlegt. In den Stammsätzen können personenspezifische Daten, beispielsweise mitarbeiterspezifische Informationen wie etwa die Arbeitszeiten, gespeichert sein. Die personenspezifischen Daten stehen dem Anwesenheitserfassungs-Terminal 10 bzw. dessen Steuereinheit 11 via Kommunikationsverbindung zwischen Speicherverwaltungseinheit 20 und Steuereinheit 11 zur Verfügung. Die Speicherverwaltungseinheit 20 verarbeitet und speichert zudem bestimmungsgemäß die Anwesenheitsinformation der Person 40, beispielsweise, dass diese nun zur Arbeit erschienen ist und ihre Arbeitszeiterfassung beginnen soll.

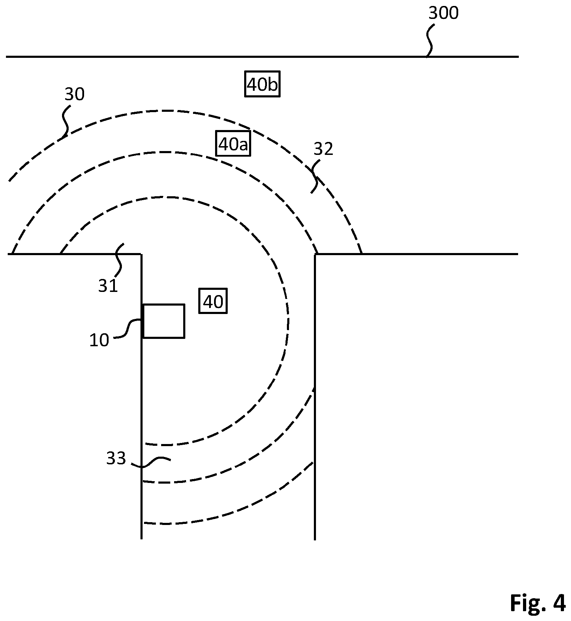

Ferner weist das dargestellte und insofern bevorzugte Anwesenheitserfassungs-Terminal 10 eine Sensoreinheit 12 auf. Die Sensoreinheit 12 des Anwesenheitserfassungs-Terminals 10 beobachtet eine Umgebungszone 30, welche Umgebungszone 30 das Anwesenheitserfassungs-Terminal 10 umgibt (vgl. ebenso Figur 4). Die Sensoreinheit 12 empfängt demnach Signale aus der Umgebungszone 30, wie durch den durchgezogenen von der Umgebungszone 30 zur Sensoreinheit 12 weisenden Pfeil in Figur 1 angedeutet.

Die Sensoreinheit 12 kann zur Beobachtung der Umgebungszone 30 unterschiedliche Einheiten aufweisen. Im Ausführungsbeispiel der Figur 1 weist die Sensoreinheit 12 die vier folgenden Einheiten auf: eine Kamera 121, einen biometrischen Sensor 122, einen Annäherungssensor 123 und eine mobile access engine 124. Dabei kann die Sensoreinheit 12 auch nur eine der Einheiten oder unterschiedliche Kombinationen der Einheiten aufweisen. Auch das Vorsehen zweier typgleicher Einheiten, zum Beispiel etwa zweier Kameras 121, ist möglich. Es können auch mehrere separat operierende Sensoreinheiten unterschiedlicher Konfigurationen vorgesehen sein.

Über die genannten Einheiten der Sensoreinheit 12 wird zunächst grundsätzlich die Anwesenheit der Person 40 in der Umgebungszone 30 erfasst. Hieraus resultierend kann die Sensoreinheit 12 eine detektierte Präsenzinformation der Person 40 ausgegeben. Konkret beobachtet beispielsweise die auf die Umgebungszone 30 gerichtete Kamera 121 den entsprechenden Raum, zum Beispiel einen das Anwesenheitserfassungs-Terminal 10 umgebenden Flur (mit Bezugszeichen 300 in Figur 4 gekennzeichnet), und erkennt mittels Bildverarbeitung, sobald die Person 40 die Umgebungszone 30 betritt.

Der biometrische Sensor 122 der Sensoreinheit 12 kann wiederum eine direkte Aktion der Person 40 an der Sensoreinheit 12 und somit am Anwesenheitserfassungs-Terminal 10 erfassen. Hierzu kann beispielsweise die Person 40 an dem biometrischen Sensor 122 einen Fingerabdruckscan durchführen oder ein sonstiges Signal auslösen.

Der Annäherungssensor 123 der Sensoreinheit 12 kann in verschiedenen Ausführungsformen ausgestaltet sein und die Anwesenheit der Person 40 in der Umgebungszone 30 kontaktlos erfassen.

Die mobile access engine 124 (mobile Zutrittseinrichtung) der Sensoreinheit 12 erfasst die Anwesenheit der Person 40 in der Umgebungszone 30 über einen Kommunikationsaustausch zwischen der mobile access engine 124 und der Person 40, konkret einem mobilen Zutrittsmedium der Person 40. Bei dem mobilen Zutrittsmedium der Person 40 kann es sich um eine Zutrittskarte handeln, wie etwa eine Schlüsselkarte. Es kann auch ein schlüsselloser Transponder (Badge) verwendet werden oder aber auch ein mobiles Endgerät der Person 40, welches mobile Endgerät über eine spezifische Anwendung zur Kommunikation mit der mobile access engine 124 verfügt.

Die mobile access engine 124 der Sensoreinheit 12 ist derart konfiguriert, dass ein in Figur 1 über den gestrichelten Doppelpfeil angedeuteter Kommunikationsaustausch zwischen der mobile access engine 124 und dem mobilen Zutrittsmedium der Person stattfindet, um die Anwesenheit der Person 40 zu erfassen und die detektierte Präsenzinformation ausgeben zu können.

Beispielsweise kann der schlüssellose Transponder (Badge) oder die Zutrittskarte der Person 40 auch mit RFID- oder auch mit UWB-Technologie (Ultra-Wideband) ausgestattet sein. Ein entsprechendes RFID- oder UWB-Modul der mobile access engine 124 detektiert sodann, wenn die Person 40 die Umgebungszone 30 betritt. Diese Funktion ist auch über eine Anwendung auf dem mobilen Endgerät der Person 40 realisierbar.

Die mobile access engine 124 kann als Software in dem Anwesenheitserfassungs-Terminal 10 bzw. in der Sensoreinheit 12 realisiert sein bzw. eine Software umfassen, über welche Software der Kommunikationsaustausch zwischen der Person 40 und der Sensoreinheit 12 ausgewertet und gegebenenfalls die detektierte Präsenzinformation erzeugt und ausgegeben wird.

Beobachtet die Sensoreinheit 12 etwa auf eine der beschriebenen Weisen, dass sich eine Person 40 in der Umgebungszone 30 befindet bzw. die Umgebungszone 30 betritt, so kann die Sensoreinheit 12 eine detektierte Präsenzinformation der Person 40 ausgeben.

Ferner weist, wie in Figur 1 dargestellt, das Anwesenheitserfassungs-Terminal 10 eine identification engine 111 (Identifikationseinrichtung) auf. Diese, beispielsweise in die Steuereinheit 11 integrierte, identification engine 111 kann etwa auf der Grundlager jener detektierten Präsenzinformation der Person 40 die Person 40 identifizieren. Die identification engine 111 ist dabei zur Ausgabe einer Identifizierungsinformation eingerichtet, welche Identifizierungsinformation für eine jeweilige Person 40 eindeutig repräsentativ sein oder jedenfalls jene Person 40 eindeutig einer vorgegebenen Personengruppe zuordnen kann. So kann es zum Beispiel für manche Interaktionen auch nicht unbedingt notwendig sein, die konkrete Person 40 eindeutig zu identifizieren, sondern ausreichend sein, sie lediglich einer Personen-Gruppe zuzuweisen. Beispielsweise kann erkannt werden, dass die Person 40 grundsätzlich einer "erlaubten" Personen-Gruppe zugehört, sodass die Person 40 eben eine Interaktion durchführen kann, solange die Interaktion nicht eine tiefergehende eindeutige Identifizierung erfordert.

Die identification engine 111 kann als Software in dem Anwesenheitserfassungs-Terminal 10 bzw. in der Steuereinheit 11 realisiert sein bzw. eine Software umfassen, über welche Software detektierte Präsenzinformation der Person 40 oder aber auch weitere personenbezogene Informationen ausgewertet werden können.

Wurde beispielweise von der Sensoreinheit 12 grundsätzlich eine Person 40 erkannt, so kann diese mittels der identification engine 111 konkret identifiziert werden. Die angesprochene Identifizierung der Person 40 kann etwa auf Basis der detektierten Präsenzinformation der Person 40 und/oder auf Basis zumindest einer weiteren personenbezogenen Information erfolgen. Die eine bzw. die weitere/weiteren personenbezogene/personenbezogenen Information/Informationen, die zur Identifizierung herangezogen werden können, müssen dabei keine persönlichen Daten umfassen, sondern nur eine Eindeutigkeit der Person 40 bzw. eine eindeutige Unterscheidbarkeit einer Person von anderen Personen ermöglichen.

Bei der detektierten Präsenzinformation kann es sich im Beispiel einer Kamera 121 etwa um ein Foto der Person 40 handeln. Es könnte jedoch auch lediglich das Signal, dass die Kamera 121 eine Person erfasst hat, als einfache detektierte Präsenzinformation der Steuereinheit 11 bzw. der identification engine 111 zur Verfügung gestellt werden. Das konkrete Foto der Person 40 könnte als weitere personenbezogene Information zur Verfügung gestellt werden, auf deren Grundlage sodann die konkrete Identifizierung stattfindet.

Die identification engine 111 ist darüber hinaus zur Verifizierung der Person 40 und zur Ausgabe einer Verifizierungsinformation eingerichtet. Unter Verifizierung ist hier ein Detailgrad mehr gemeint als eine simple Identifizierung. So kann über die beschriebene Identifizierung die Person 40 an sich erkannt bzw. einer Personen-Gruppe zugordnet werden. Unter Verifizierung ist jedoch weitergehende gemeint, dass auch überprüft wird, ob die identifizierte Person 40 etwa eine reale Person ist oder ob nicht eine Täuschung vorliegt, da beispielsweise der Versuch einer bewussten Falschbuchung unternommen wird. Dabei erfolgt die Verifizierung der Person 40 auf Basis der detektierten Präsenzinformation der Person 40 und/oder auf Basis der weiteren personenbezogenen Information.

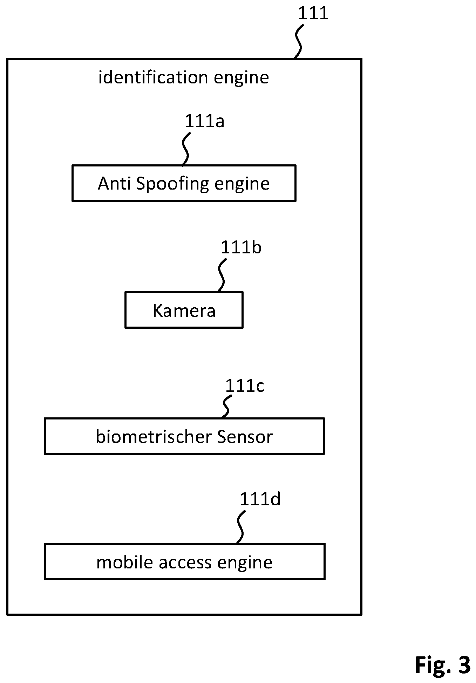

Die identification engine 111 kann hierzu, wie im Ausführungsbeispiel der Figur 3, welches eine identification engine 111 detailliert darstellt, ersichtlich, eine Anti-Spoofing engine 111a umfassen. Über die Anti-Spoofing engine 111a, welche als Software in der identification engine 111 realisiert sein bzw. eine Software umfassen kann, kann zwischen realen Personen und lediglich vor die Kamera 121 gehaltenen Fotos einer Person unterschieden werden. Eine solche Anti-Spoofing engine 111a ist besonders vorteilhaft, wenn Kameras 121 als Sensoreinheiten 12 zum Einsatz kommen, um eine bewusst falsche Buchung am Anwesenheitserfassungs-Terminal 10 zu unterbinden.

Die identification engine 111 bekommt also entweder detektierte Präsenzinformationen oder weitere personenbezogene Informationen zur Auswertung und Identifizierung der Person 40 bereitgestellt oder aber die identification engine 111 kann entsprechende Informationen auch selbst detektieren. Hierzu kann, wie in dem Ausführungsbeispiel der identification engine 111 in Figur 3 dargestellt, die identification engine 111 ebenso wenigstens eine der folgenden Einheiten umfassen: wenigstens eine Kamera 111b, wenigstens einen biometrischen Sensor 111c, und/oder wenigstens eine mobile access engine 111d. Die Funktionalitäten der einzelnen Einheiten wurde zuvor bereits im Zusammenhang mit der Sensoreinheit 12 beschrieben, worauf verwiesen werden kann. Explizit sei erwähnt, dass die mobile access engine 111d der identification engine 111 so konfiguriert ist, dass, zur Identifizierung der Person 40, ein Kommunikationsaustausch zwischen der mobile access engine 111d und einem mobilen Zutrittsmedium (Badge, Zutrittskarte, mobiles Endgerät bzw. Anwendung auf mobilem Endgerät oder dergleichen) der Person 40 stattfindet.

Grundsätzlich kann zur Reduzierung einzelner Einheiten auch vorgesehen sein, dass die identification engine 111 direkt auf die Einheiten der Sensoreinheit 12 (Kamera 121, biometrischer Sensor 122, mobile access engine 124) zugreifen kann bzw. entsprechende Informationen von diesen zur Verfügung gestellt bekommt.

Weiterhin kann auch vorgesehen sein, dass die Sensoreinheit 12 und die Steuereinheit 11 bzw. die identification engine 111 integraler Bestandteil des Anwesenheitserfassungs-Terminals 10 und beispielsweise mitsamt den entsprechenden Sensoren gemeinsam in einem Gehäuse des Anwesenheitserfassungs-Terminals 10 verbaut sind. Es kann jedoch auch vorteilhaft sein, die Sensoreinheit 12 oder einen Teil der Sensoreinheit 12, beispielsweise die Kamera 121, außerhalb des Anwesenheitserfassungs-Terminals 10 an einem günstigen Punkt der Umgebungszone 30 anzuordnen, während etwa die identification engine 111 beispielsweise mit ihrer Kamera 111b integraler Bestandteil des Anwesenheitserfassungs-Terminals 10 ist. Sodann kann über die Sensoreinheit 12 vorteilhaft zunächst das grundsätzliche Detektieren einer Person bereits weiter entfernt vom Anwesenheitserfassungs-Terminal 10 erfolgen, während die Identifizierung der Person 40 mittels der identification engine 111 auf Grundlage der an der Kamera 111b generierten Informationen am Anwesenheitserfassungs-Terminal 10 selbst erfolgt.

Zwecks einer bedienerfreundlichen Interaktion mit dem Anwesenheitserfassungs-Terminal 10 können der regelmäßig heterogenen Gruppe an mit dem Terminal interagierenden Personen 40 verschiedene Arten einer Interaktion zur Verfügung gestellt werden. Vorschlagsgemäß ist es in vorteilhafter Weise so, dass die Steuereinheit 11 derart mit der Speicherverwaltungseinheit 20 interagierend eingerichtet ist, dass im Stammsatz in Abhängigkeit von der Identifizierungsinformation überprüft wird, welche Art einer Interaktion die identifizierte Person 40 mit dem Anwesenheitserfassungs-Terminal 10 wünscht. Zusätzlich ist die Steuereinheit 11 derart eingerichtet, dass am Anwesenheitserfassungs-Terminal 10 und/oder an dem mobilen Zutrittsmedium der Person 40 eine nutzerspezifische Art der Interaktion für die identifizierte Person 40 bereitgestellt wird.

Das entsprechende vorschlagsgemäße computerimplementierte Verfahren zum Betreiben des Anwesenheitserfassungs-Terminals 10 zur Erfassung einer Anwesenheitsinformation einer Person 40 auf Basis einer Aktion der Person 40 umfasst die folgenden Schritte:
- Identifizieren der Person 40 durch die identification engine 111,
- Überprüfen eines Stammsatzes personenspezifischer Daten dahingehend, welche Art einer Interaktion die identifizierte Person 40 mit dem Anwesenheitserfassungs-Terminal 10 wünscht, und
- Bereitstellen einer nutzerspezifischen Art der Interaktion für die identifizierte Person 40.

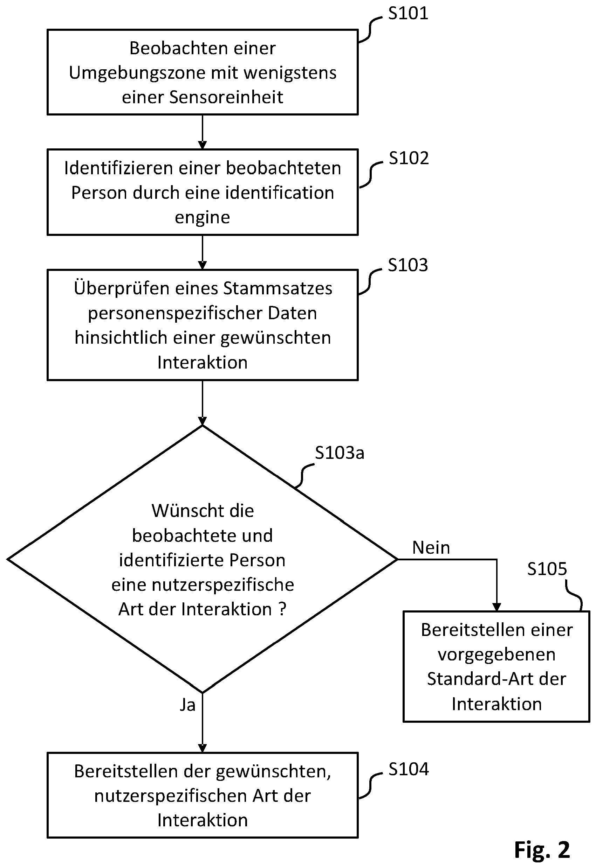

In Figur 2 ist ein Ausführungsbeispiel des vorschlagsgemäßen Verfahrens dargestellt, wobei im Rahmen von Schritt S101 zunächst grundsätzlich die Umgebungszone 30 mit der Sensoreinheit 12 beobachtet wird. Sollte ein Person 40 erkannt werden, so wird diese im Rahmen von Schritt S102 mithilfe der identification engine 111 identifiziert. Im Zuge des anschließenden Schritts S103 wird sodann konkret hinsichtlich der identifizierten Person 40 im Stammsatz der personenspezifischen Daten überprüft, ob eine spezifische Art der Interaktion gewünscht ist (Schritt S103a). Ist das Ergebnis dieser Überprüfung "ja", dann wird im Rahmen von Schritt S104 die gewünschte nutzerspezifische Art der Interaktion für die Person 40 bereitgestellt. Ist das Ergebnis der Prüfung jedoch "nein", so wird eine vorgegebene Standard-Art der Interaktion bereitgestellt (Schritt S105).

Eine Art der Interaktion umfasst beispielsweise ein Bereitstellen einer nutzerspezifischen Benutzeroberfläche an einem Display des Anwesenheitserfassungs-Terminals 10 und/oder des mobilen Zutrittsmediums der Person 40. Dazu kann das Anwesenheitserfassungs-Terminal 10 ein Display aufweisen und/oder das Anwesenheitserfassungs-Terminal 10 mit dem ein Display umfassenden mobilen Zutrittsmedium der Person 40 in Kommunikationsverbindung stehend eingerichtet sein.

Besonders vorteilhaft ist bzw. wird dann zur individuellen an die Präferenzen der interagierenden Person 40 angepassten Art der Interaktion die nutzerspezifische Benutzeroberfläche in einer nutzerspezifischen Schriftgröße und/oder in einer nutzerspezifischen Sprache bereitgestellt.

Zusätzlich oder alternativ ist vorgeschlagen, dass die Art der Interaktion zumindest den Aspekt umfasst, dass ein Sprachsignal am Anwesenheitserfassungs-Terminal 10 und/oder an dem mobilen Zutrittsmedium der Person 40 ausgegeben wird. Dabei ist bzw. wird das Sprachsignal bevorzugt in einer nutzerspezifischen Sprache und/oder in einer nutzerspezifischen Lautstärke bereitgestellt.

So ist es möglich, dass eine Person 40 als präferierte Art der Interaktion eine "Sprachsteuerung" hinterlegt hat. Dies könnte beispielsweise auch der Fall sein, wenn die Person 40 eine Seh- oder Leseschwäche hat oder Analphabet ist. Sodann wird als benutzerspezifische Interaktionsart, nachdem diese Person 40 vom Terminal identifiziert wurde, eine Sprachsteuerung als Interaktionsart bereitgestellt. So können am Terminal selbst oder etwa am mobilen Zutrittsmedium, etwa am mobilen Endgerät der Person 40, die verschiedenen Buchungsoptionen wie beispielsweise "Einbuchen", "Ausbuchen", "Kontostand abrufen", etc., vorgelesen werden. Dies kann bevorzugt in der präferierten Sprache der interagierenden Person 40 erfolgen. Sodann kann die Person 40, beispielsweise durch ein selbst ausgeführtes Sprachsignal (etwa ein "Ja" oder auch ein "Nein") die vorgelesene und somit vorgeschlagene Aktion bestätigen oder ablehnen. Auch ist es möglich, eine Eingabe durch eine bestimmte Bewegung, etwa mit einer Geste oder auch des mobilen Zutrittsmediums, etwa des mobilen Endgeräts oder Badges, zu bestätigen.

Bei einer anderen Person 40 wiederum könnte eine "stumme Interaktion", beispielsweise mittels einer Anwendung auf dem mobilen Endgerät, bevorzugt sein. Dann werden keine Sprachsignale ausgegeben, sondern vielmehr der Person 40 Optionen der Interaktion auf dem mobilen Endgerät angezeigt, die von der Person 40 ausgewählt und somit die Buchung vorgenommen werden können.

Grundsätzlich ist zur Erfassung einer Absicht der Interaktion der Person 40 mit dem Anwesenheitserfassungs-Terminal 10 eine intent engine 112 (Absichtserkennungseinrichtung) eingerichtet und vorgesehen. Die intent engine 112 kann Teil der Steuereinheit 11 sein und kann als Software in dem Anwesenheitserfassungs-Terminal 10 bzw. in der Steuereinheit 11 realisiert sein bzw. eine Software umfassen, über welche Software spezifische Informationen, die aus den Handlungen der Person 40 resultieren, ausgewertet werden können.

Die intent engine 112 erkennt die Absicht der Person 40, nämlich generell, dass bzw. sogar konkret, warum jene Person 40 mit dem Anwesenheitserfassungs-Terminal 10 in Interaktion treten möchte bzw. tritt. Dazu erfasst die intent engine 112 grundsätzlich die Abicht einer Interaktion der Person 40 und gibt beispielsweise eine Absichtsinformation aus, welche Absichtsinformation die Intention der Person 40 über die Interaktion repräsentiert. Es kann sich dabei lediglich um die Tatsache handeln, dass die Person 40 nun eine Interaktion durchführen möchte, oder aber auch bereits um die konkrete Interaktion an sich, sprich die konkrete Absicht der Interaktion.

Die konkrete Absicht der Interaktion kann dabei beispielsweise sein, dass sich die Person 40 einbuchen möchte, da ihre Arbeitszeit beginnt, oder dass sie sich aus dem System zur Zeiterfassung ausbuchen möchte. Weiterhin kann die konkrete Absicht der Person 40 auch darin bestehen, etwa eine in dem Stammsatz hinterlegte, spezifische Information abzurufen. So könnte beispielsweise die Person 40 ihre in einem gewissen vordefinierten Zeitraum abgeleistete Anwesenheitszeit bzw. Arbeitszeit abfragen wollen. Auch kann es möglich sein, über das Anwesenheitserfassungs-Terminal 10 in Erfahrung zu bringen, inwiefern noch Guthaben auf einer Zutrittskarte oder einer personenspezifischen Mitarbeiterkarte vorhanden ist, falls die Zutrittskarte bzw. die personenspezifische Mitarbeiterkarte (oder etwa ein Badge) auch zur Zahlung in einer Kantine oder dergleichen geeignet ist. Bevorzugt umfasst die Speicherverwaltungseinheit 20 den Stammsatz entsprechender personenspezifischer Daten.

Die intent engine 112 ist bevorzugt derart konfiguriert, dass, zur Erfassung der Absicht der Interaktion der Person 40 mit dem Anwesenheitserfassungs-Terminal 10, eine Signaleingabe durch die Person 40 verwendet wird. Dabei erfolgt die Signaleingabe wie folgt:
- die intent engine 112 empfängt ein von der Person 40 an dem mobilen Zutrittsmedium der Person 40, insbesondere dem mobilen Endgerät, eingegebenes, die Absicht der Interaktion repräsentierendes Signal; und/oder
- die intent engine 112 empfängt eine die Absicht der Interaktion repräsentierende Spracheingabe von der Person 40 oder erkennt eine die Absicht der Interaktion repräsentierende Gesteneingabe von der Person 40, und/oder
- die intent engine 112 verarbeitet ein von der Person 40 an dem Anwesenheitserfassungs-Terminal 10 und/oder an dem mobilen Zutrittsmedium der Person 40, bevorzugt an dem Display, eingegebenes und die Absicht der Interaktion repräsentierendes Signal, und/oder
- die intent engine 112 empfängt ein von der Person 40 mittels einer Bewegung mit dem mobilen Zutrittsmedium der Person 40 getriggertes, die Absicht der Interaktion repräsentierendes Signal.

Mittels der genannten aktiven Eingaben durch die Person 40, also mittels eines Durchführens:
- einer vordefinierten Bewegung mit dem mobilen Zutrittsmedium, insbesondere eines erneuten Auflegens des mobilen Zutrittsmedium der Person 40 (bevorzugt eines Badges) auf eine Schnittstelle des Anwesenheitserfassungs-Terminals 10; und/oder
- einer Eingabe am Anwesenheitserfassungs-Terminal 10 und/oder an dem mobilen Zutrittsmedium der Person 40; und/oder
- einer vordefinierten Gesteneingabe; und/oder
- einer vordefinierten Spracheingabe
kann die Person 40 aktiv ihre Absicht dem Terminal mitteilen. Auf diese Weise kann auch die Gefahr von Fehlbuchungen reduziert werden.

Konkret ist im vorgenannten Fall einer aktiven Eingabe der Person 40 an ihrem mobilen Endgerät vorteilhaft, dass die Absicht der Interkation durch die Person 40 eindeutig eingegeben und klar eingegeben werden kann, ohne dass Interpretationsschritte erforderlich wären. Hierzu können in einer Anwendung auf dem mobilen Endgerät der Person 40 die für sie möglichen spezifischen Interaktionen mit dem Anwesenheitserfassungs-Terminal 10, und zwar besonders vorteilhaft in der von der Person 40 präferierten Weise, angezeigt und dann durch die Person 40 ausgewählt werden. Durch eine entsprechende Kommunikation des mobilen Endgeräts mit dem Anwesenheitserfassungs-Terminal 10 bzw. konkret mit der intent engine 112 wird sodann die Absicht der Interaktion im Anwesenheitserfassungs-Terminal 10 erfasst und zum Beispiel als Absichtsinformation bereitgestellt und weiterverarbeitet.

Im zuvor alternativ bzw. zusätzlich genannten Fall, dass die Signaleingabe über die Spracheingabe der Person 40 erfolgt oder aber auch, dass die Signaleingabe über eine Gesteneingabe der Person 40 erfolgt, ist eine entsprechende voice detection engine 112a (Spracherkennungseinrichtung) oder gesture detection engine 112b (Gestenerkennungseinrichtung) vorgesehen. Die voice detection engine 112a sowie die gesture detection engine 112b können als Software in der Steuereinheit 11 bzw. in der intent engine 112 realisiert sein bzw. eine Software umfassen, über welche Software das eingehende Sprachsignal der Person 40 bzw. die erfasste Geste bzw. Bewegung der Person 40 spezifische Informationen ausgewertet werden können.

Beispielsweise kann die Person 40 über eine Spracheingabe, wie etwa das Ausrufen des Wortes "Einbuchen", ihre Absicht der Interaktion mit dem Anwesenheitserfassungs-Terminal 10 kommunizieren. Wird jenes Sprachsignal von der voice detection engine 112a erkannt, weiß die intent engine 112 sodann, dass eine und auch konkret welche Interaktion erwünscht ist. Im Falle einer Geste kann beispielweise vorgesehen sein, dass die Person 40 eine bestimmte Bewegung, die etwa von der Sensoreinheit 12 erfasst wird, ausführen muss, sodass die gesture detection engine 112b diese dann als Einbuchungsabsicht oder Ausbuchungsabsicht erkennt und die entsprechende Absichtsinformation erkennt. Eine Geste kann auch sein, dass die Person 40 mit ihrem mobilen Zutrittsmedium eine vorbestimmte Bewegung ausführt, welche Bewegung sodann drahtlos am Anwesenheitserfassungs-Terminal 10 empfangen und durch die gesture detection engine 112b als entsprechende Absichtsinformation erkannt wird.

Im zuvor ebenfalls genannten Fall ist es beispielsweise erforderlich, dass die Person 40 etwa am Touchscreen-Display des Anwesenheitserfassungs-Terminal 10 selbst ein Signal eingibt, um ihre Absicht auszudrücken. Dabei können von dem Anwesenheitserfassungs-Terminal 10 am Display auch nur mögliche, entsprechende Absichten vorgegeben sein. Die intent engine 112 verarbeitet jenes eingegebene Signal sodann als entsprechende Absichtsinformation.

Die Umgebungszone 30 kann, wie Figur 1 und an einem Bespiel einer Anordnung eines Anwesenheitserfassungs-Terminals 10 in einem Flur 300 ebenso Figur 4 zu entnehmen ist, in eine Mehrzahl an Unterzonen aufgeteilt sein. So ist eine Nahzone 31, die dem Anwesenheitserfassungs-Terminal 10 am nächsten angeordnet ist, sowie eine Fernzone 32, die am weitesten vom Anwesenheitserfassungs-Terminal 10 entfernt angeordnet ist, vorgesehen. Zwischen der Nahzone 31 und der Fernzone 32 befindet sich noch eine mittlere Zone 33.

Vorteilhaft erkennt die Sensoreinheit 12 konkret, in welcher Unterzone sich eine Person 40 befindet und gibt gegebenenfalls eine entsprechende spezifische detektierte Präsenzinformation der Person 40 aus, und zwar in Abhängigkeit von einem oder mehreren zonenspezifischen Signal/Signalen, das/die von der Person 40 in der genannten Unterzonen sich die Person 40 ausgeht/ausgehen.

Dabei muss das zonenspezifische Signal nicht aktiv durch die Person 40 ausgelöst werden. Vielmehr wird das zonenspezifische Signal durch die Person 40 lediglich hervorgerufen, etwa durch die Anwesenheit bzw. durch die Art einer Fortbewegung der Person 40 in der jeweiligen Unterzone. So kann beispielsweise über ein Kamera-Tracking eine Person 40 in der Unterzone bzw. deren Bewegung verfolgt werden und daraus ein zonenspezifisches Signal generiert werden. Das zonenspezifische Signal kann also durch die einfache Anwesenheit bzw. die Bewegung der Person 40 in der Unterzone bewirkt bzw. hervorgerufen werden.

Dabei können folgende Umstände in das zonenspezifische Signal und somit die spezifische detektierte Präsenzinformation der Person 40 einfließen:
- In welcher Unterzone befindet sich die Person 40, und/oder
- in welche Unterzone begibt sich die Person 40 begibt, und/oder
- wie sieht ein Bewegungsmuster der Person 40 aus?

Das Bewegungsmuster der Person 40 kann sich darauf beziehen, wie eine Bewegungsrichtung der Person 40 und/oder eine Bewegungsgeschwindigkeit der Person 40 ist. Die Bewegungsrichtung kann dabei über einen Richtungsvektor über die Zeit repräsentiert sein. Hierüber kann das Bewegungsmuster der Person 40 innerhalb einer Umgebungszone bzw. Unterzone erfasst und etwa der Analyse der Absicht der Interaktion zugrunde gelegt werden. Mit der Information, in welche Unterzone sich eine Person 40 begibt, wird ein Zonenwechsel einer Person 40 erfassbar und kann der Analyse zugrunde gelegt werden.

Das technische Mittel zur Erkennung der Position, also der Anwesenheit, bzw. der Bewegung der Person 40 etwa in einer Unterzone kann vorteilhaft die Sensoreinheit 12 sein. Die Sensoreinheit 12 umfasst dabei vorteilhaft eine Kamera 121.

Auf diese Weise kann beispielsweise ein schrittweises Wecken einzelner engines bzw. Einrichtungen bzw. in anderen Worten ein Versetzen des Anwesenheitserfassungs-Terminals 10 in verschiedene Betriebszustände in Abhängigkeit davon erfolgen, in welcher Unterzone sich die Person 40 befindet bzw. auf welche Weise sich die Person 40 etwa in einer Unterzone fortbewegt. Betritt die Person 40 beispielsweise lediglich die Fernzone 32 und wird dort grundsätzlich detektiert, nähert sich jene Person 40 jedoch nicht weiter dem Anwesenheitserfassungs-Terminal 10 an und betritt demnach nicht die mittlere Zone 33 oder die Nahzone 31, so kann daraus geschlossen werden, dass die Person 40 gar nicht in Interaktion mit dem Anwesenheitserfassungs-Terminal 10 treten möchte. Dementsprechend kann das Anwesenheitserfassungs-Terminal 10 beispielsweise in einem Energiesparmodus betrieben werden, solange die Person 40 nicht in der Nahzone 31 oder zumindest nicht in der mittleren Zone 33 detektiert wird. Es können auch schrittweise einzelne Module angeschaltet werden, die etwa grundsätzlich für die Interaktion einer Person notwendig sind, sobald die Person 40 in einer vorgegebenen Unterzone detektiert wird.

Das in Figur 4 wiedergegebene Beispiel eines Flurs 300, der eine T-Gabelung aufweist, veranschaulicht die unterschiedlichen Unterzonen, dargestellt über gestrichelte Teilkreise, die das Anwesenheitserfassungs-Terminal 10 in unterschiedlichen Abständen umgeben. Die Person 40, die sich in der Nahzone 31 befindet, interagiert mit dem Anwesenheitserfassungs-Terminal 10. Die Person 40a wiederum befindet sich in der Fernzone 32, in welcher zwar eine grundsätzliche Detektion der Person 40a mittels der Sensoreinheit 12 des Anwesenheitserfassungs-Terminal 10 stattfindet, welche Detektion jedoch noch nicht dazu führen würde, dass das Anwesenheitserfassungs-Terminal 10 arbeiten müsste. Erst wenn die Person 40a auch die mittlere Zone 33 bzw. je nach gewünschter Konfiguration die Nahzone 31 betritt, wird eine entsprechende Absicht über die Interaktion der Person 40 erkannt, sodass beispielsweise ein Wechsel in einen aktiveren Betriebszustand stattfindet. Die dritte Person 40b wiederum befindet sich außerhalb der gesamten Umgebungszone 30, sodass in Bezug auf die Person 40b gar keine Detektion der Person stattfindet. Das Anwesenheitserfassungs-Terminal 10 detektiert die Person 40b in der dargestellten Konfiguration nicht, da klar ist, dass keine Interaktion mit dem Anwesenheitserfassungs-Terminal 10 durch die Person 40b gewünscht ist.

Vorteilhaft sind in das Anwesenheitserfassungs-Terminal 10 auch wenigstens eine weitere Kontrollebene bzw. mehrerer Kotrollebenen integriert. So kann der Person 40 ein Feedback, also eine Rückmeldung, über die erfolgte Buchung oder aber auch nur über die angefragte Interaktion, also über die vorgenommene oder geplante Abänderung der Anwesenheitsinformation in der Speicherverwaltungseinheit 20 oder eben auch darüber, dass keine Änderung vorgenommen wurde, gegeben werden.

Vorteilhaft ist die Speicherverwaltungseinheit 20 dann derart eingerichtet, dass, wenn die Anwesenheitsinformation gespeichert worden ist, die Speicherverwaltungseinheit 20 in den Daten der Person 40 in ihrem Stammsatz der personenspezifischen Daten überprüft, ob ein Feedback zu der Interaktion der Person 40 mit dem Anwesenheitserfassungs-Terminal 10 gewünscht ist.

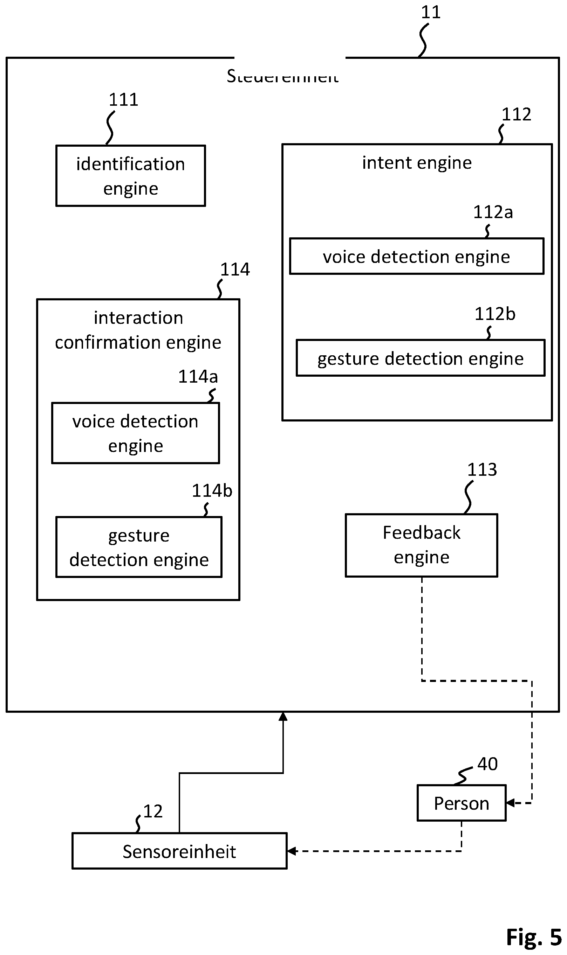

Das Anwesenheitserfassungs-Terminal 10 bzw. die Steuereinheit 11 kann dazu, wie etwa in Figur 5 dargestellt, zusätzlich zur identification engine 111 sowie intent engine 112 auch eine Feedback engine 113 (Rückmeldungseinrichtung) aufweisen. Die Feedback engine 113 ist derart eingerichtet, dass, wenn die Interaktion der Person 40 mit dem Anwesenheitserfassungs-Terminal 10 erfolgt oder angefragt ist, ein Feedbacksignal ausgegeben werden kann. Das Feedbacksignal kann dabei am Anwesenheitserfassungs-Terminal 10, beispielsweise am Display dieses bzw. über Lautsprecher, oder aber auch an dem mobilen Zutrittsmedium der Person 40 ausgegeben werden. Dabei kann das Feedbacksignal etwa wie folgt ausgegeben werden:
- als akustisches Feedbacksignal; und/oder
- als Sprachsignal; und/oder
- als haptisches Feedbacksignal, insbesondere Vibrationssignal, vorzugsweise an dem mobilen Zutrittsmedium der Person (40); und/oder
- als grafisches Signal.

Das Feedbacksignal kann beispielsweise auch eine Aufforderung oder eine Benutzerinformationen umfassen, mit der ein Unterhalter des Anwesenheitserfassungs-Terminals (z.B. Arbeitgeber) die Person 40, die als Benutzer mit dem Anwesenheitserfassungs-Terminal 10 interagiert, zu etwas auffordert oder diese über etwas informiert. Eine Aufforderung an die Person 40 könnte etwa lauten: "bei Personalabteilung melden", "bitte Überstunden reduzieren" etc. Eine simple Information könnte etwa über den aktuellen Zeitkontostand erfolgen.

Es kann vorteilhaft vorgesehen sein, dass sensible personenspezifische Informationen nur auf dem mobilen Endgerät der Person 40 ausgeben werden, während allgemeine und nicht sensible Informationen nur auf dem Anwesenheitserfassungs-Terminal 10 oder auf dem Anwesenheitserfassungs-Terminal 10 sowie dem mobilen Endgerät ausgeben werden.

Die Feedback engine 113 kann zumindest teilweise als Software in dem Anwesenheitserfassungs-Terminal 10 bzw. in der Steuereinheit 11 realisiert sein, über welche Software zum einen mithilfe der Speicherverwaltungseinheit 20 überprüft werden kann, ob die Person 40 ein Feedback wünscht und, zum anderen, das entsprechende Feedback veranlasst werden kann. Dementsprechend kann die Feedback engine 113 bzw. die Steuereinheit 11 in Kommunikationsverbindung mit einer Sprachausgabeeinheit stehen, falls etwa ein Sprachsignal als Feedbacksignal gewünscht ist.

Besonders vorteilhaft wird im Stammsatz der personenspezifischen Daten zuvor kontrolliert, ob die konkrete Person 40, die die Interaktion durchführt und zuvor identifiziert wurde, überhaupt ein Feedback wünscht, bzw. falls ja, in welcher Form das Feedback gewünscht ist. Die Feedback engine 113 kann demnach derart eingerichtet sein, dass ein nutzerspezifisches Feedbacksignal ausgegeben werden kann. So kann etwa ein Sprachsignal in der jeweiligen Sprache der Person 40 ausgegeben werden. Ferner könnte beispielsweise bei einer Person 40 mit einer Hörbehinderung vorgesehen sein, dass diese Person 40 ein anderes Signal als Feedbacksignal, etwa ein grafisches oder haptisches Signal erhält.

Um die Sicherheit einer korrekten Interaktion zwischen der Person 40 und dem Anwesenheitserfassungs-Terminal 10 zu erhöhen, ist in dem Ausführungsbeispiel der Figur 5 ferner eine interaction confirmation engine 114 (Interaktionsbestätigungseinrichtung) in dem Anwesenheitserfassungs-Terminal 10 bzw. der Steuereinheit 11 vorgesehen.

Die interaction confirmation engine 114 kann eine klarstellende Absichtsinformation empfangen. Die klarstellende Absichtsinformation ist dafür gedacht, die eigentlich bereits kommunizierte und empfangene Absicht der Interaktion der Person 40 mit dem Anwesenheitserfassungs-Terminal 10 zu verifizieren oder falsifizieren. Dabei ist vorteilhaft, wenn jene klarstellende Absichtsinformation eine weitere Buchungsinformation für die Steuereinheit 11 darstellt. Von dieser weiteren Buchungsinformation wird zusätzlich zu der Identifizierungsinformation sowie Absichtsinformation dann abhängig gemacht, ob die Buchung in der Speicherverwaltungseinheit 20 durchgeführt werden soll oder nicht.

Hierzu kann die interaction confirmation engine 114 zumindest teilweise als Software in dem Anwesenheitserfassungs-Terminal 10 bzw. in der Steuereinheit 11 realisiert sein, über welche Software entsprechende Signale bzw. Handlungen der Person 40 zur Bestätigung bzw. Verneinung der zuvor erfassten Absicht ausgewertet werden können.

Die interaction confirmation engine 114 kann als voice detection engine 114a (Spracherkennungseinrichtung) zur Erfassung einer Spracheingabe durch die Person 40 und/oder als gesture detection engine 114b (Gestenerkennungseinrichtung) zur Erfassung einer Gesteneingabe durch die Person 40 ausgebildet sein. Hierzu kann auf die Beschreibung der voice detection engine 112a bzw. gesture detection engine 112b zuvor verwiesen werden.

Konkret kann eine klarstellende Absichtsinformation etwa drin bestehen, dass die Person 40 über ein Sprachsignal (etwa ein ausgesprochenes "ja") bestätigt, dass sie die erfasste Interaktion wünscht und diese ausgeführt werden soll. Auch kontaktgebundene klarstellende Absichtsinformationen sind denkbar, indem die Person 40 etwa eine Eingabe am Anwesenheitserfassungs-Terminal 10 oder auf ihrem mobilen Zutrittsmedium vornimmt. Weiterhin sind jedoch auch sprachsowie kontaktlose Bestätigungen durch die Person 40 denkbar, indem die Person 40 etwa eine bestimmte Geste, beispielsweise auch mit ihrem mobilen Zutrittsmedium, ausführt. Eine spezifische Bewegung des mobilen Zutrittsmediums kann etwa über RFID- oder UWB-Technik als klarstellende Absichtsinformation von der interaction confirmation engine 114 erkannt werden.

Vorteilhaft ist die intent engine 112 ferner dazu eingerichtet, der empfangenen Absichtsinformation eine Entfernungsinformation zuzuordnen. Hierüber kann erkannt werden, aus welcher Entfernung das von der Person 40 eingegebene bzw. veranlasste Signal kommt. Ein Beispiel ist, dass die Absichtsinformation über ein Sprachsignal durch die Person 40 mitgeteilt wird und, beispielsweise über die Lautstärke des Signals, durch die interaction detection engine 112 erkannt wird, wie weit die Person 40 entfernt ist. Dann kann der Buchungsvorgang davon abhängig gemacht werden, dass die Entfernungsinformation einem vorgegebenen Wertebereich entspricht. Also kann eine Buchung verhindert werden, wenn die Person 40 noch zu weit vom Anwesenheitserfassungs-Terminal 10 entfernt ist. Zum Buchungsvorgang und dem dafür erforderlichen Abgleich der detektierten bzw. empfangenen Informationen mit hinterlegten Informationen kann die interaction detection engine 112 dann derart konfiguriert sein, dass die Absichtsinformation nur weiterverarbeitet bzw. ausgegeben wird, wenn die Entfernungsinformation dem vorgegebenen Wertebereich entspricht.

Vorteilhaft kann weiterhin der Person 40 ein Hinweis durch das Anwesenheitserfassungs-Terminal 10 gegeben werden, ab wann sich die Person 40 nahe genug am Anwesenheitserfassungs-Terminal 10 befindet und demnach eine Buchung möglich ist. So ist nach jenem Ausführungsbeispiel die Steuereinheit 11 derart eingerichtet, dass, wenn die detektierte Präsenzinformation der Person 40 einem vorgegebenen Wertebereich entspricht, eine Initiierungs-Information an die Person 40 zur Mitteilung, dass die Interaktion möglich ist, ausgegeben wird.

Die Initiierungs-Information kann ein Sprachsignal oder ein akustisches Signal, und/oder ein grafisches Signal, und/oder ein haptisches Signal, insbesondere ein Vibrationssignal, sein. Die Die Initiierungs-Information am Anwesenheitserfassungs-Terminal 10, etwa über einen Lautsprecher oder Display des Anwesenheitserfassungs-Terminals 10, oder aber auch an einem mobilen Zutrittsmedium der Person 40, wie etwa seinem mobilen Endgerät ausgegeben werden.

Dabei ist die Speicherverwaltungseinheit 20 bevorzugt derart eingerichtet, dass, wenn die Initiierungs-Information an die Person 40 ausgegeben werden soll, die Speicherverwaltungseinheit 20 in den Daten der Person 40 überprüft, welcher Typ an Initiierungs-Information durch die Person 40 gewünscht ist. Auf diese Weise kann besonders vorteilhaft auf die individuellen Bedürfnisse oder Voraussetzungen der Person 40 eingegangen werden. So könnte eine Person 40 mit Sehbehinderung etwa bevorzugt ein akustisches Signal bzw. Sprachsignal als Initiierungs-Information ausgegeben bekommen und nicht etwa ein grafisches Signal, während es sich bei einer Person 40 mit einer Hörbehinderung genau umgekehrt verhält. Auch können sprachliche bzw. Text umfassende Signale als Initiierungs-Information individuell an die Person 40 angepasst in ihrer jeweiligen Sprache ausgegeben werden. Analog verhält es sich bei eventuellen Feedbacksignalen, die ebenso personenspezifisch ausgegeben werden können, da personenspezifisch Informationen im Stammsatz der Daten in der Speicherverwaltungseinheit 20 hinterlegt sind.

Die im Rahmen des vorschlagsgemäßen und dargestellten Anwesenheitserfassungs-Terminal 10 beschriebenen Merkmale und Vorteile sind entsprechend auf das vorschlagsgemäße computerimplementierte Verfahren zum Betreiben eines Anwesenheitserfassungs-Terminals übertragbar. Konkret ist das computerimplementierte Verfahren zum Betreiben jenes vorschlagsgemäßen und beschriebenen Anwesenheitserfassungs-Terminals 10 eingerichtet. Das vorschlagsgemäße und hier beschriebene Anwesenheitserfassungs-Terminal 10 wiederum ist zur Ausführung des vorschlagsgemäßen computerimplementierten Verfahrens zum Betreiben eines Anwesenheitserfassungs-Terminals eingerichtet.

Insofern wurden zuvor und werden nachfolgend die das Anwesenheitserfassungs-Terminal 10 bzw. das Verfahren zum Betreiben des Anwesenheitserfassungs-Terminals 10 charakterisierende Merkmale und spezifische Vorteile regelmäßig nur einfach beschrieben.

## Patentansprüche

1. Anwesenheitserfassungs-Terminal (10), insbesondere Zeiterfassungs-Terminal, zur Erfassung einer Anwesenheitsinformation einer Person (40) auf Basis einer Aktion der Person (40), umfassend:
- eine Steuereinheit (11),
- eine Speicherverwaltungseinheit (20), wobei die Speicherverwaltungseinheit (20) mindestens einen Stammsatz personenspezifischer Daten umfasst, und
- eine identification engine (111), wobei die identification engine (111) zur Identifizierung der Person (40) und zur Ausgabe einer Identifizierungsinformation eingerichtet ist,
wobei die Steuereinheit (11) derart mit der Speicherverwaltungseinheit (20) interagierend eingerichtet ist, im Stammsatz in Abhängigkeit von der Identifizierungsinformation zu überprüfen, welche Art einer Interaktion die identifizierte Person (40) mit dem Anwesenheitserfassungs-Terminal (10) wünscht, und
wobei die Steuereinheit (11) derart eingerichtet ist, dass am Anwesenheitserfassungs-Terminal (10) und/oder an einem mobilen Zutrittsmedium der Person (40) eine gewünschte nutzerspezifische Art der Interaktion für die identifizierte Person (40) bereitgestellt wird,
**dadurch gekennzeichnet, dass**
die gewünschte nutzerspezifische Art der Interaktion mit dem Anwesenheitserfassungs-Terminal (10) durch die Person (40) auf die folgende Art ausgewählt wird: Durchführen einer vordefinierten Bewegung mit einem/dem mobilen Zutrittsmedium der Person (40).

2. Anwesenheitserfassungs-Terminal (10) nach Anspruch 1, wobei wenigstens eine Sensoreinheit (12) vorgesehen ist, wobei die Sensoreinheit (12) zur Beobachtung einer Umgebungszone (30) und, insbesondere zur Ausgabe einer aus der Beobachtung der Umgebungszone (30) detektierten Präsenzinformation der Person (40), eingerichtet ist.

3. Anwesenheitserfassungs-Terminal (10) nach Anspruch 1 oder 2, wobei ferner ein Display am Anwesenheitserfassungs-Terminal (10) vorgesehen ist und/oder das Anwesenheitserfassungs-Terminal (10) mit einem ein Display umfassenden mobilen Zutrittsmedium der Person (40) in Kommunikationsverbindung stehend eingerichtet ist, und
wobei die Art der Interaktion zumindest den folgenden Aspekt umfasst:
- Bereitstellen einer nutzerspezifischen Benutzeroberfläche an dem Display des Anwesenheitserfassungs-Terminals (10) und/oder des mobilen Zutrittsmediums der Person (40).

4. Anwesenheitserfassungs-Terminal (10) nach Anspruch 3, wobei die nutzerspezifische Benutzeroberfläche in einer nutzerspezifischen Schriftgröße und/oder in einer nutzerspezifischen Sprache bereitgestellt ist.

5. Anwesenheitserfassungs-Terminal (10) nach einem der Ansprüche 1 bis 4, wobei ein/das Display am Anwesenheitserfassungs-Terminal (10) vorgesehen ist und/oder das Anwesenheitserfassungs-Terminal (10) mit einem/dem ein/das Display umfassenden mobilen Zutrittsmedium der Person (40) in Kommunikationsverbindung stehend eingerichtet ist, und wobei die Art der Interaktion zumindest den folgenden Aspekt umfasst:
- Ausgabe eines Sprachsignals am Anwesenheitserfassungs-Terminal (10) und/oder an dem mobilen Zutrittsmedium der Person (40),
wobei, insbesondere, das Sprachsignal in einer nutzerspezifischen Sprache und/oder in einer nutzerspezifischen Lautstärke bereitgestellt ist.

6. Anwesenheitserfassungs-Terminal (10) nach einem der Ansprüche 1 bis 5, wobei ferner eine intent engine (112) zur Erfassung einer Absicht der Interaktion der Person (40) mit dem Anwesenheitserfassungs-Terminal (10) eingerichtet ist, wobei die intent engine (112) derart konfiguriert ist, dass, zur Erfassung der Absicht der Interaktion der Person (40) mit dem Anwesenheitserfassungs-Terminal (10), eine Signaleingabe durch die Person (40) verwendet wird,
wobei, insbesondere, die intent engine (112) ferner derart konfiguriert ist, dass die Signaleingabe wie folgt erfolgt:
- die intent engine (112) empfängt ein von der Person (40) an einem/dem mobilen Zutrittsmedium der Person (40), insbesondere einem mobilen Endgerät, eingegebenes, die Absicht der Interaktion repräsentierendes Signal; und/oder
- die intent engine (112) empfängt eine die Absicht der Interaktion repräsentierende Spracheingabe von der Person (40) oder erkennt eine die Absicht der Interaktion repräsentierende Gesteneingabe von der Person (40), und/oder
- die intent engine (112) verarbeitet ein von der Person (40) an dem Anwesenheitserfassungs-Terminal (10) und/oder an einem/dem mobilen Zutrittsmedium der Person (40), bevorzugt an einem Display, eingegebenes und die Absicht der Interaktion repräsentierendes Signal, und/oder
- die intent engine (112) empfängt ein von der Person (40) mittels einer Bewegung mit einem/dem mobilen Zutrittsmedium der Person (40) getriggertes, die Absicht der Interaktion repräsentierendes Signal.

7. Anwesenheitserfassungs-Terminal (10) nach einem der Ansprüche 1 bis 6, wobei ferner eine Feedback engine (113) vorgesehen ist, wobei die Feedback engine (113) derart eingerichtet ist, dass, wenn die Interaktion der Person (40) mit dem Anwesenheitserfassungs-Terminal (10) erfolgt oder angefragt ist, ein Feedbacksignal am Anwesenheitserfassungs-Terminal (10) und/oder an einem/dem mobilen Zutrittsmedium der Person (40) ausgegeben werden kann,
wobei, insbesondere, das Feedbacksignal zumindest auf eine der folgenden Arten ausgebildet ist:
- als akustisches Feedbacksignal; und/oder
- als Sprachsignal; und/oder
- als haptisches Feedbacksignal, insbesondere Vibrationssignal, vorzugsweise an dem mobilen Zutrittsmedium der Person (40); und/oder
- als grafisches Signal.

8. Computerimplementiertes Verfahren zum Betreiben eines Anwesenheitserfassungs-Terminals (10), insbesondere Zeiterfassungs-Terminal, zur Erfassung einer Anwesenheitsinformation einer Person (40) auf Basis einer Aktion der Person (40), umfassend die Schritte:
- Identifizieren der Person (40) durch eine identification engine (111),
- Überprüfen eines Stammsatzes personenspezifischer Daten dahingehend, welche Art einer Interaktion die identifizierte Person (40) mit dem Anwesenheitserfassungs-Terminal (10) wünscht, und
- Bereitstellen einer gewünschten nutzerspezifischen Art der Interaktion für die identifizierte Person (40),
**dadurch gekennzeichnet, dass**
die gewünschte Interaktion mit dem Anwesenheitserfassungs-Terminal (10) durch die Person (40) auf die folgende Art ausgewählt wird: Durchführen einer vordefinierten Bewegung mit einem/dem mobilen Zutrittsmedium der Person (40).

9. Computerimplementiertes Verfahren nach Anspruch 8, wobei zum Identifizieren der Person (40) zunächst ein Beobachten einer Umgebungszone (30) mit wenigstens einer Sensoreinheit (12) erfolgt.

10. Computerimplementiertes Verfahren nach Anspruch 8 oder 9, wobei die Art der Interaktion zumindest den folgenden Aspekt umfasst:
- Bereitstellen einer nutzerspezifischen Benutzeroberfläche an einem Display des Anwesenheitserfassungs-Terminals (10) und/oder eines mobilen Zutrittsmediums der Person (40).

11. Computerimplementiertes Verfahren nach Anspruch 10, wobei die nutzerspezifische Benutzeroberfläche in einer nutzerspezifischen Schriftgröße und/oder in einer nutzerspezifischen Sprache bereitgestellt wird.

12. Computerimplementiertes Verfahren nach einem der Ansprüche 8 bis 11, wobei die Art der Interaktion zumindest den folgenden Aspekt umfasst:
- Ausgabe eines Sprachsignals am Anwesenheitserfassungs-Terminal (10) und/oder an einem/dem mobilen Zutrittsmedium der Person (40),
wobei, insbesondere, das Sprachsignal in einer nutzerspezifischen Sprache und/oder in einer nutzerspezifischen Lautstärke bereitgestellt wird.

13. Computerimplementiertes Verfahren nach einem der Ansprüche 8 bis 12, wobei die gewünschte nutzerspezifische Art der Interaktion mit dem Anwesenheitserfassungs-Terminal (10) durch die Person (40) ferner auf zumindest eine der folgenden Arten ausgewählt wird:
- Durchführen einer Eingabe am Anwesenheitserfassungs-Terminal (10) und/oder an einem/dem mobilen Zutrittsmedium der Person (40); und/oder
- Durchführen einer vordefinierten Gesteneingabe; und/oder
- Durchführen einer vordefinierten Spracheingabe.

14. Computerimplementiertes Verfahren nach einem der Ansprüche 8 bis 13, wobei das Anwesenheitserfassungs-Terminal (10) und/oder ein/das mobiles/mobile Zutrittsmedium der Person (40) ein Feedbacksignal über eine durchgeführte oder angefragte Interaktion mit dem Anwesenheitserfassungs-Terminal (10) ausgibt, wobei, insbesondere, das Feedbacksignal zumindest auf eine der folgenden Arten ausgegeben wird:
- als akustisches Feedbacksignal; und/oder
- als Sprachsignal; und/oder
- als haptisches Feedbacksignal, insbesondere Vibrationssignal, vorzugsweise an dem mobilen Zutrittsmedium der Person (40); und/oder
- als grafisches Signal.

15. Computerprogramm, umfassend Befehle, die bei der Ausführung des Programms durch einen Prozessor eines Anwesenheitserfassungs-Terminals (10) das Anwesenheitserfassungs-Terminal (10) veranlassen, die Schritte des Verfahrens nach einem der Ansprüche 8 bis 14 auszuführen.

## Claims

1. An attendance recording terminal (10), in particular a time recording terminal, for recording an item of attendance information of a person (40) on the basis of an action of the person (40), comprising:
- a control unit (11),
- a memory management unit (20), wherein the memory management unit (20) comprises at least one master record of person-specific data, and
- an identification engine (111), wherein the identification engine (111) is configured to identify the person (40) and to output an item of identification information,
wherein the control unit (11) is configured to interact with the memory management unit (20) in such manner to verify in the master record, as a function of the identification information, what type of interaction the identified person (40) wishes to have with the attendance recording terminal (10), and
wherein the control unit (11) is configured in such manner that a desired user-specific type of interaction is provided for the identified person (40) at the attendance recording terminal (10) and/or at a mobile access medium of the person (40),
**characterised in that**
the desired user-specific type of interaction with the attendance recording terminal (10) is selected by the person (40) in the following way: Carrying out a predefined movement with a/the mobile access medium of the person (40).

2. The attendance recording terminal (10) according to claim 1, wherein at least one sensor unit (12) is provided, wherein the sensor unit (12) is configured to observe a surrounding zone (30) and, in particular, to output presence information of the person (40) detected by observing the surrounding zone (30).

3. The attendance recording terminal (10) according to claim 1 or 2, wherein furthermore a display is provided on the attendance recording terminal (10) and/or the attendance recording terminal (10) is configured to be in communicative connection with a mobile access medium of the person (40) comprising a display, and
wherein the type of interaction comprises at least the following aspect:
- Providing a user-specific user interface on the display of the attendance recording terminal (10) and/or the mobile access medium of the person (40).

4. The attendance recording terminal (10) according to claim 3, wherein the user-specific user interface is provided in a user-specific font size and/or in a user-specific language.

5. The attendance recording terminal (10) according to one of claims 1 to 4, wherein a/the display is provided on the attendance recording terminal (10) and/or the attendance recording terminal (10) is arranged to be in communicative connection with a/the mobile access medium of the person (40) comprising a/the display, and wherein the type of interaction comprises at least the following aspect:
- Outputting a voice signal at the attendance recording terminal (10) and/or at the mobile access medium of the person (40),
wherein, in particular, the voice signal is provided in a user-specific language and/or at a user-specific volume.

6. The attendance recording terminal (10) according to one of claims 1 to 5, wherein furthermore an intent engine (112) is configured for recording an intention of the interaction of the person (40) with the attendance recording terminal (10), wherein the intent engine (112) is configured in such manner that, in order to record the intention of the interaction of the person (40) with the attendance recording terminal (10), a signal input by the person (40) is used, wherein, in particular, the intent engine (112) is further configured in such manner that the signal input is carried out as follows:
- the intent engine (112) receives a signal which is input by the person (40) on a/the mobile access medium of the person (40), in particular a mobile terminal, and which represents the intention of the interaction; and/or
- the intent engine (112) receives a voice input from the person (40) representing the intention of the interaction or detects a gesture input from the person (40) representing the intention of the interaction, and/or
- the intent engine (112) processes a signal which is input by the person (40) at the attendance recording terminal (10) and/or at a/the mobile access medium of the person (40), preferably at a display, and which represents the intention of the interaction, and/or
- the intent engine (112) receives a signal which is triggered by the person (40) by means of a movement with a/the mobile access medium of the person (40) and which represents the intention of the interaction.

7. The attendance recording terminal (10) according to one of claims 1 to 6, wherein furthermore a feedback engine (113) is provided, wherein the feedback engine (113) is configured in such manner that, when the interaction of the person (40) with the attendance recording terminal (10) takes place or is requested, a feedback signal can be output at the attendance recording terminal (10) and/or at a/the mobile access medium of the person (40),
wherein, in particular, the feedback signal is formed in at least one of the following ways:
- as an audible feedback signal; and/or
- as a voice signal; and/or
- as a haptic feedback signal, in particular a vibration signal, preferably on the mobile access medium of the person (40); and/or
- as a graphic signal.

8. A computer-implemented method for operating an attendance recording terminal (10), in particular a time recording terminal, for recording an item of attendance information of a person (40) on the basis of an action of the person (40), comprising the steps of:
- Identifying the person (40) by way of an identification engine (111),
- Verifying a master record of person-specific data as to what type of interaction the identified person (40) wishes to have with the attendance recording terminal (10), and
- Providing a desired user-specific type of interaction for the identified person (40),
**characterised in**
**that** the desired interaction with the attendance recording terminal (10) is selected by the person (40) in the following way: Carrying out a predefined movement with a/the mobile access medium of the person (40).

9. The computer-implemented method according to claim 8, wherein the person (40) is first identified by observing a surrounding zone (30) with at least one sensor unit (12).

10. The computer-implemented method according to claim 8 or 9, wherein the type of interaction comprises at least the following aspect:
- Providing a user-specific user interface on a display of the attendance recording terminal (10) and/or a mobile access medium of the person (40).

11. The computer-implemented method according to claim 10, wherein the user-specific user interface is provided in a user-specific font size and/or in a user-specific language.

12. The computer-implemented method according to one of claims 8 to 11, wherein the type of interaction comprises at least the following aspect:
- Outputting a voice signal at the attendance recording terminal (10) and/or at a/the mobile access medium of the person (40),
wherein, in particular, the voice signal is provided in a user-specific language and/or at a user-specific volume.

13. The computer-implemented method according to one of claims 8 to 12, wherein the desired user-specific type of interaction with the attendance recording terminal (10) is further selected by the person (40) in at least one of the following ways:
- Carrying out an input at the attendance recording terminal (10) and/or at a/the mobile access medium of the person (40); and/or
- Carrying out a predefined gesture input; and/or
- Carrying out a predefined voice input.

14. The computer-implemented method according to one of claims 8 to 13, wherein the attendance recording terminal (10) and/or a/the mobile access medium of the person (40) outputs a feedback signal about an interaction with the attendance recording terminal (10) that has been carried out or requested, wherein, in particular, the feedback signal is output in at least one of the following ways:
- as an audible feedback signal; and/or
- as a voice signal; and/or
- as a haptic feedback signal, in particular a vibration signal, preferably on the mobile access medium of the person (40); and/or
- as a graphic signal.

15. A computer program comprising instructions which, when the program is executed by a processor of an attendance recording terminal (10), cause the attendance recording terminal (10) to perform the steps of the method according to one of claims 8 to 14.

## Revendications

1. Terminal de détection de présence (10), en particulier terminal de détection de temps, pour détecter une information de présence d'une personne (40) sur la base d'une action de la personne (40), comprenant :
- une unité de commande (11),
- une unité de gestion de mémoire (20), dans lequel l'unité de gestion de mémoire (20) comprend au moins une fiche de données spécifiques à la personne, et
- un moteur d'identification (111), dans lequel le moteur d'identification (111) est conçu pour identifier la personne (40) et pour émettre une information d'identification,
dans lequel l'unité de commande (11) est conçue, en interagissant avec l'unité de gestion de mémoire (20), de manière à vérifier dans la fiche, en fonction de l'information d'identification, quel type d'interaction la personne identifiée (40) souhaite avoir avec le terminal de détection de présence (10), et
dans lequel l'unité de commande (11) est conçue de telle sorte qu'un type d'interaction, spécifique à l'utilisateur, souhaité est mis à disposition de la personne identifiée (40) sur le terminal de détection de présence (10) et/ou sur un support d'accès mobile de la personne (40),
**caractérisé en ce que**
le type d'interaction spécifique à l'utilisateur souhaité avec le terminal de détection de présence (10) est sélectionné par la personne (40) de la manière suivante : réalisation d'un mouvement prédéfini avec un/le support d'accès mobile de la personne (40).

2. Terminal de détection de présence (10) selon la revendication 1, dans lequel il est prévu au moins une unité de capteur (12), dans lequel l'unité de capteur (12) est conçue pour observer une zone environnante (30) et, en particulier, pour émettre une information de présence de la personne (40) détectée à partir de l'observation de la zone environnante (30).

3. Terminal de détection de présence (10) selon la revendication 1 ou 2, dans lequel en outre un écran est prévu sur le terminal de détection de présence (10) et/ou le terminal de détection de présence (10) est conçu de manière à être en liaison de communication avec un support d'accès mobile de la personne (40) comprenant un écran, et
dans lequel le type d'interaction comprend au moins l'aspect suivant :
- fourniture d'une interface utilisateur spécifique à l'utilisateur sur l'écran du terminal de détection de présence (10) et/ou du support d'accès mobile de la personne (40).

4. Terminal de détection de présence (10) selon la revendication 3, dans lequel l'interface utilisateur spécifique à l'utilisateur est fournie dans une taille de police spécifique à l'utilisateur et/ou dans une langue spécifique à l'utilisateur.

5. Terminal de détection de présence (10) selon l'une des revendications 1 à 4, dans lequel un/l'écran est prévu sur le terminal de détection de présence (10) et/ou le terminal de détection de présence (10) est conçu pour être en liaison de communication avec un/le support d'accès mobile de la personne (40) comprenant un/l'écran, et dans lequel le type d'interaction comprend au moins l'aspect suivant :
- émission d'un signal vocal sur le terminal de détection de présence (10) et/ou sur le support d'accès mobile de la personne (40),
dans lequel, en particulier, le signal vocal est fourni dans une langue spécifique à l'utilisateur et/ou à un volume spécifique à l'utilisateur.

6. Terminal de détection de présence (10) selon l'une des revendications 1 à 5, dans lequel en outre un moteur d'intention (112) est conçu pour détecter une intention de l'interaction de la personne (40) avec le terminal de détection de présence (10), dans lequel le moteur d'intention (112) est configuré de telle sorte que, pour détecter l'intention de l'interaction de la personne (40) avec le terminal de détection de présence (10), une entrée de signal par la personne (40) est utilisée,
dans lequel, en particulier, le moteur d'intention (112) est en outre configuré de telle sorte que l'entrée de signal s'effectue comme suit :
- le moteur d'intention (112) reçoit un signal représentant l'intention de l'interaction, entré par la personne (40) sur un/le support d'accès mobile de la personne (40), en particulier un terminal mobile ; et/ou
- le moteur d'intention (112) reçoit une entrée vocale de la personne (40) représentant l'intention de l'interaction ou reconnaît une entrée gestuelle de la personne (40) représentant l'intention de l'interaction, et/ou
- le moteur d'intention (112) traite un signal saisi par la personne (40) sur le terminal de détection de présence (10) et/ou sur un/le support d'accès mobile de la personne (40), de préférence sur un écran, et représentant l'intention de l'interaction, et/ou
- le moteur d'intention (112) reçoit un signal représentant l'intention de l'interaction, déclenché par la personne (40) par le biais d'un mouvement avec un/le support d'accès mobile de la personne (40).

7. Terminal de détection de présence (10) selon l'une des revendications 1 à 6, dans lequel il est en outre prévu un moteur de rétroaction (113), dans lequel le moteur de rétroaction (113) est conçu de telle sorte que, lorsque l'interaction de la personne (40) avec le terminal de détection de présence (10) a lieu ou est demandée, un signal de rétroaction peut être émis sur le terminal de détection de présence (10) et/ou sur un/le support d'accès mobile de la personne (40),
dans lequel, en particulier, le signal de rétroaction est formé au moins de l'une des manières suivantes :
- comme signal de rétroaction acoustique ; et/ou
- comme signal vocal ; et/ou
- comme signal de rétroaction haptique, en particulier signal vibratoire, de préférence sur le support d'accès mobile de la personne (40) ; et/ou
- comme signal graphique.

8. Procédé mis en œuvre par ordinateur pour faire fonctionner un terminal de détection de présence (10), en particulier un terminal de détection de temps, pour détecter une information de présence d'une personne (40) sur la base d'une action de la personne (40), comprenant les étapes consistant à :
- identifier la personne (40) par un moteur d'identification (111),
- vérifier une fiche de données spécifiques à la personne pour déterminer le type d'interaction que la personne identifiée (40) souhaite avoir avec le terminal de détection de présence (10), et
- fournir à la personne (40) identifiée un type spécifique à l'utilisateur souhaité de l'interaction,
**caractérisé en ce**
**que** l'interaction souhaitée avec le terminal de détection de présence (10) est sélectionnée par la personne (40) de la manière suivante : réalisation d'un mouvement prédéfini avec un/le support d'accès mobile de la personne (40).

9. Procédé mis en œuvre par ordinateur selon la revendication 8, dans lequel, pour identifier la personne (40), une observation d'une zone environnante (30) est d'abord effectuée avec au moins une unité de capteur (12).

10. Procédé mis en œuvre par ordinateur selon la revendication 8 ou 9, dans lequel le type de l'interaction comprend au moins l'aspect suivant :
- fourniture d'une interface utilisateur spécifique à l'utilisateur sur un écran du terminal de détection de présence (10) et/ou un support d'accès mobile de la personne (40).

11. Procédé mis en œuvre par ordinateur selon la revendication 10, dans lequel l'interface utilisateur spécifique à l'utilisateur est fournie dans une taille de police spécifique à l'utilisateur et/ou dans une langue spécifique à l'utilisateur.

12. Procédé mis en œuvre par ordinateur selon l'une des revendications 8 à 11, dans lequel le type de l'interaction comprend au moins l'aspect suivant :
- émission d'un signal vocal sur le terminal de détection de présence (10) et/ou sur un/le support d'accès mobile de la personne (40),
dans lequel, en particulier, le signal vocal est fourni dans une langue spécifique à l'utilisateur et/ou à un volume spécifique à l'utilisateur.

13. Procédé mis en œuvre par ordinateur selon l'une des revendications 8 à 12, dans lequel le type spécifique à l'utilisateur souhaité de l'interaction avec le terminal de détection de présence (10) est en outre sélectionné par la personne (40) de l'une au moins des manières suivantes :
- réalisation d'une saisie sur le terminal de détection de présence (10) et/ou sur un/le support d'accès mobile de la personne (40) ; et/ou
- réalisation d'une saisie gestuelle prédéfinie ; et/ou
- réalisation d'une saisie vocale prédéfinie.

14. Procédé mis en œuvre par ordinateur selon l'une des revendications 8 à 13, dans lequel le terminal de détection de présence (10) et/ou un/le support d'accès mobile de la personne (40) émettent un signal de rétroaction concernant une interaction réalisée ou demandée avec le terminal de détection de présence (10), dans lequel, en particulier, le signal de rétroaction est émis au moins de l'une des manières suivantes :
- comme signal de rétroaction acoustique ; et/ou
- comme signal vocal ; et/ou
- comme signal de rétroaction haptique, en particulier signal vibratoire, de préférence sur le support d'accès mobile de la personne (40) ; et/ou
- comme signal graphique.

15. Programme d'ordinateur, comprenant des instructions qui, lorsque le programme est exécuté par un processeur d'un terminal de détection de présence (10), amènent le terminal de détection de présence (10) à exécuter les étapes du procédé selon l'une des revendications 8 à 14.
